# EUROPEAN PATENT SPECIFICATION

(11) **EP 3 836 627 B1**
(45) Date of publication and mention of the grant of the patent: **11.11.2026**
(21) Application number: 19848302.6
(22) Date of filing: 23.07.2019
(51) Int. Cl.: H04W 48/20, H04W 48/12, H04W 60/04, H04W 36/00, H04W 36/08, H04W 36/24, H04W 36/30

(54) **CELL RESELECTION METHOD, TERMINAL, AND NETWORK DEVICE**
ZELLNEUAUSWAHLVERFAHREN, ENDGERÄT UND NETZWERKVORRICHTUNG
PROCÉDÉ DE RESÉLECTION DE CELLULE, TERMINAL ET DISPOSITIF DE RÉSEAU

(30) Priority: 09.08.2018 CN 201810904656
(43) Date of publication of application: 16.06.2021
(73) Proprietor: VIVO MOBILE COMMUNICATION CO., LTD., Dongguan, Guangdong 523860 (CN)
(72) Inventor: LIANG, Jing, Dongguan, Guangdong 523860 (CN); CHEN, Li, Dongguan, Guangdong 523860 (CN)
(74) Representative: Lavoix
(86) International application number: PCT/CN2019/097238
(87) International publication number: WO 2020/029794

(56) References cited:
- CN-A- 101 242 654
- CN-A- 101 400 096
- CN-A- 101 409 904
- CN-A- 108 243 460
- CHINA TELECOM ET AL: "Support for Randomized threshold offset based reselection", vol. RAN WG2, no. Beijing, China; 20150824 - 20150828, 23 August 2015 (2015-08-23), XP051003778, Retrieved from the Internet <URL:http://www.3gpp.org/ftp/Meetings_3GPP_SYNC/RAN2/Docs/> [retrieved on 20150823]
- HUAWEI ET AL: "Consideration on cell specific priority", vol. RAN WG2, no. Fukuoka, Japan; 20150525 - 20150529, 24 May 2015 (2015-05-24), XP050973907, Retrieved from the Internet <URL:http://www.3gpp.org/ftp/Meetings_3GPP_SYNC/RAN2/Docs/> [retrieved on 20150524]
- CMCC: "Discussion on the immediate cell reselection issue", vol. RAN WG2, no. Montreal, Canada; 20180702 - 20180706, 22 June 2018 (2018-06-22), XP051526308, Retrieved from the Internet <URL:http://www.3gpp.org/ftp/tsg%5Fran/WG2%5FRL2/TSGR2%5FAHs/2018%5F07%5FNR/Docs/R2%2D1810532%2Ezip> [retrieved on 20180622]
- NTT DOCOMO: "C R to 25.304 on Cell Reselection enhancements", 3GPP TSG-RAN WG2 MEETING #68BIS R2-101614, 26 February 2010 (2010-02-26), XP050416711
- NTT DOCOMO: "Cell reselection enhancements", 3GPP TSG-RAN WG2 MEETING #68BIS R2-100770, 22 January 2009 (2009-01-22), XP050421263

## Description

### TECHNICAL FIELD

This disclosure relates to the field of communications technologies, and in particular, to a cell reselection method, a terminal, and a network device.

### BACKGROUND

In a mobile communications system, when a terminal performs initial access, because the terminal does not know in advance which radio frequency channel (Radio Frequency channel, RF channel) is suitable for access, the terminal scans (scan) all RF channels based on a capability of the terminal, to look for a suitable (suitable) cell. On each scanned carrier frequency, the terminal only needs to search for a cell having best signal quality. After finding a suitable cell, the terminal selects to access and camp on the cell, and stops an initial cell selection procedure. In this case, if an RF channel that is not scanned exists, the terminal does not need to scan the RF channel any more.

When the terminal camps on a serving cell, the terminal may evaluate, in sequence based on a frequency priority order provided by a network device, whether a suitable neighboring cell is available for reselection on each frequency, and if detecting a suitable neighboring cell for reselection, the terminal may initiate a reselection procedure to the cell on the frequency.

Currently, during cell reselection, neighboring cells satisfying a condition need to be sorted. A parameter for determining whether a neighboring cell satisfies the condition may be obtained based on system information broadcast by the network device. However, the related parameter broadcast by the network device is per-frequency (per-frequency), and cannot reflect a specific status of the neighboring cell. It is possible that after the terminal performs cell reselection to a neighboring cell, the terminal finds that the cell cannot satisfy the reselection condition, and cannot camp on the cell, and the terminal needs to reselect or return to a source cell again, causing a ping-pong effect. Document "R2-153156" discussed E-UTRAN Inter-frequency and inter-RAT Cell Reselection criteria, UE personalized reselection threshold rules and Cell reselection parameters in system information broadcasts; "R2-152503" disclosed consideration on cell specific priority; "R2-1810532" disclosed discussion on the immediate cell reselection issue.

### SUMMARY

The scope of the present invention is determined only by the scope of the appended claims. The present invention is defined in the accompanying claims.

Therefore, according to the foregoing technical solutions in some embodiments of this disclosure, the terminal can obtain the per-cell reselection parameter of the neighboring cell, and perform cell reselection based on the per-cell reselection parameter. This can ensure that quality of the reselected cell satisfies a camping requirement, and avoid a problem of connection instability of the terminal after cell reselection.

### BRIEF DESCRIPTION OF DRAWINGS

To describe the technical solutions in the embodiments of this disclosure more clearly, the following briefly describes the accompanying drawings required for describing some embodiments of this disclosure. Apparently, the accompanying drawings in the following description show merely some embodiments of this disclosure, and a person of ordinary skill in the art may still derive other drawings from these accompanying drawings without creative efforts.
FIG. 1 presents a block diagram of a mobile communications system to which some embodiments of this disclosure may be applied;
FIG. 2 presents a schematic flowchart of a cell reselection method for a terminal according to some embodiments of this disclosure;
FIG. 3 presents a schematic modular structural diagram of a terminal according to some embodiments of this disclosure;
FIG. 4 presents a block diagram of a terminal according to some embodiments of this disclosure;
FIG. 5 presents a schematic flowchart of a cell reselection method for a network device according to some embodiments of this disclosure;
FIG. 6 presents a schematic modular structural diagram of a network device according to some embodiments of this disclosure; and
FIG. 7 presents a block diagram of a network device according to some embodiments of this disclosure.

### DESCRIPTION OF EMBODIMENTS

The following describes exemplary embodiments of this disclosure in more detail with reference to the accompanying drawings. Scope of the invention is defined by the scope of the appended claims.

In the specification and claims of this application, the terms such as "first" and "second" are intended to distinguish between similar objects but do not necessarily indicate a specific order or sequence. It should be understood that the numbers used in this way is interchangeable in appropriate circumstances so that the embodiments of this application described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device. The term "and/or" used in this specification and claims indicates at least one of connected objects.

Technologies described in this specification are not limited to long term evolution (Long Term Evolution, LTE) and LTE-Advanced (LTE-Advanced, LTE-A) systems, but may also be applied to various wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" are usually used interchangeably. The technologies described in this specification may be used for the foregoing systems and radio technologies, and may also be used for other systems and radio technologies. However, in the following descriptions, a new radio (New Radio, NR) system is described for an illustration purpose, and NR terms are used in most of the following descriptions, although these technologies may also have other applications than the NR system.

Examples provided in the following description are not intended to limit the scope, applicability, or configuration described in the claims. Functions and arrangements of discussed elements may be changed without departing from the spirit and scope of this disclosure. Various examples may be omitted or replaced properly, or various procedures or components may be added. For example, the described method may be performed in an order different from the described order, and steps may be added, omitted, or combined. In addition, features described with reference to some examples may be combined in other examples.

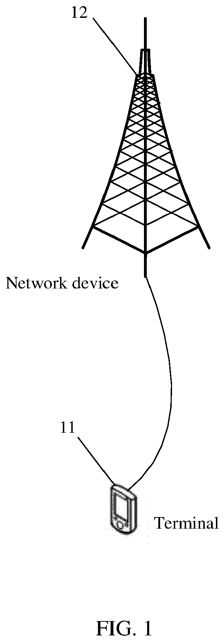

FIG. 1 is a block diagram of a wireless communications system to which some embodiments of this disclosure may be applied. The wireless communications system includes a terminal 11 and a network device 12. The terminal 11 may also be referred to as a terminal device or user equipment (User Equipment, UE). The terminal 11 may be a terminal-side device such as a mobile phone, a tablet computer (Tablet Personal Computer), a laptop computer (Laptop Computer), a personal digital assistant (Personal Digital Assistant, PDA), a mobile Internet device (Mobile Internet Device, MID), a wearable device (Wearable Device), or a vehicle-mounted device. It should be noted that a specific type of the terminal 11 is not limited in some embodiments of this disclosure. The network device 12 may be a base station or a core network. The base station may be a 5G base station or a base station of a later version (for example, a gNB or a 5G NR NB), or a base station in another communications system (for example, an eNB, a WLAN access point, or another access point). The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, or another appropriate term in the art. As long as a same technical effect is achieved, the base station is not limited to a specific technical term. It should be noted that only a base station in an NR system is used as an example in some embodiments of this disclosure, but a specific type of the base station is not limited.

Under control of a base station controller, the base station may communicate with the terminal 11. In various examples, the base station controller may be a part of the core network or some base stations. Some base stations may communicate control information or user data with the core network by using backhauls. In some examples, some of these base stations may communicate with each other directly or indirectly by using backhaul links. The backhaul links may be wired or wireless communications links. The wireless communications system may support operations on multiple carriers (wave signals of different frequencies). A multi-carrier transmitter can transmit modulated signals on the multiple carriers simultaneously. For example, multi-carrier signals modulated by using various radio technologies may be transmitted on each communications link. Each modulated signal may be sent on different carriers and may carry control information (for example, a reference signal or a control channel), overhead information, data, and the like.

The base station may perform wireless communication with the terminal 11 by using one or more access point antennas. Each base station may provide communication coverage for a corresponding coverage area of the base station. A coverage area of an access point may be divided into sectors forming only a part of the coverage area. The wireless communications system may include different types of base stations (for example, a macro base station, a micro base station, or a picocell base station). The base station may also use different radio technologies, for example, a cell or WLAN radio access technology. The base station may be associated with a same or different access networks or operator deployments. Coverage areas of different base stations (including coverage areas of base stations of a same type or different types, coverage areas using a same radio technology or different radio technologies, or coverage areas of a same access network or different access networks) may overlap each other.

A communications link in the wireless communications system may include an uplink for carrying uplink (Uplink, UL) transmission (for example, from the terminal 11 to the network device 12) or a downlink for carrying downlink (Downlink, DL) transmission (for example, from the network device 12 to the terminal 11). UL transmission may also be referred to as reverse link transmission, and DL transmission may also be referred to as forward link transmission. The wireless communications system is briefly described above. To avoid a ping-pong effect during cell reselection in the wireless communications system, some embodiments of this disclosure provide a cell reselection method.

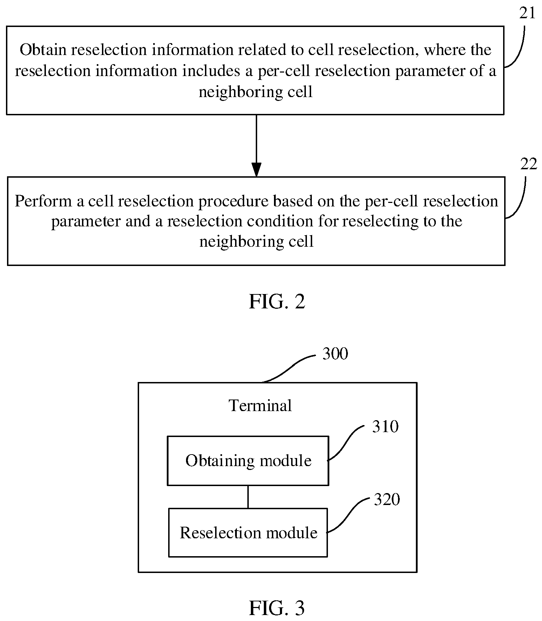

As shown in FIG. 2, some embodiments of this disclosure provide a cell reselection method, applied to a terminal. The method may include the following steps.

Step 21: Obtain reselection information related to cell reselection, where the reselection information includes a per-cell reselection parameter of a neighboring cell.

The neighboring cell may be one of cells suitable for reselection, and different neighboring cells may be configured with a same priority or different priorities. Further, frequencies of different neighboring cells are located may be configured with a same priority or different priorities. A cell suitable for reselection is a cell on which the terminal can camp and obtain a normal service. The terminal needs to have a valid universal subscriber identity module (Universal Subscriber Identity Module, USIM), and satisfy the following condition:

The cell is one of target public land mobile network (Public Land Mobile Network, PLMN) identifiers, and a target PLMN includes at least one of a PLMN selected by the terminal (selected PLMN), a PLMN with which the terminal registers (Registered PLMN), and an equivalent PLMN list (Equivalent PLMN list).

The cell satisfies a preset cell reselection criterion.

Attachment or access to the cell is not forbidden.

A tracking area (Tracking Area, TA) broadcast by the cell is not in a list of "forbidden TA areas" (list of "Forbidden Tracking Areas").

Further, in some embodiments of this disclosure, the reselection information may be configured by a network device in a source cell in which the terminal is located, or the reselection information is obtained from a historically received message. When the reselection information is configured by the network device, the reselection information may be configured by the source cell (or referred to as a serving cell or a current cell) in which the terminal is located. For example, the reselection information may be configured by the source cell by using radio resource control (Radio Resource Control, RRC) signaling and/or broadcast by using system information. The RRC signaling may be an RRC release (RRC release) message or the like. The system information may be a system information block 2 (System Information Block, SIB2) a SIB4, a SIB5, or the like. In addition, the reselection information in some embodiments of this disclosure may alternatively be obtained from the historically received message. Herein, the historically received message includes but is not limited to RRC signaling and/or system information.

Step 22: Perform a cell reselection procedure based on the per-cell reselection parameter and a reselection condition for reselecting to the neighboring cell.

The performing a cell reselection procedure means that the terminal determines, based on the per-cell reselection parameter and the reselection condition for reselecting to the neighboring cell, whether reselection from the source cell to a target cell can be performed, where the target cell is one of neighboring cells. The source cell may be a cell initially accessed by the terminal, or may be a cell accessed by the terminal in a previous cell reselection procedure. When the source cell is the cell accessed by the terminal in the previous cell reselection procedure, the source cell satisfies all conditions for cell reselection. When the source cell is the cell initially accessed by the terminal, the source cell satisfies at least one of the following conditions:
signal quality of the cell satisfies a preset condition, where signal quality includes reference signal received power (Reference Signal Received Power, RSRP) and/or reference signal received quality (Reference Signal Received Quality, RSRQ);
the terminal can obtain necessary system information of the cell, for example, a master information block (Master Information Block, MIB) and a system information block 1 (System Information Block 1, SIB1); and
a cell bar information element (cellbar Information Element, cellbar IE) in system information of the cell indicates that attachment or access to the cell is not forbidden, where the cellbar IE may be in a barred (Barred) state or a not-barred (notBarred) state.

The per-cell reselection parameter in some embodiments of this disclosure is a parameter that can represent actual network performance of the neighboring cell. The reselection information may further include a per-frequency reselection parameter of the neighboring cell, where the per-frequency reselection parameter is a parameter that can represent network performance of a frequency of the neighboring cell.

Specifically, the per-cell reselection parameter includes at least one of the following parameters: a minimum received signal level parameter, a minimum received signal level offset parameter, a minimum signal quality value parameter, a minimum signal quality offset parameter, a power compensation value parameter, a measurement offset parameter, a first target offset, a second target offset, a first intermediate quantity related to a received signal level value, a second intermediate quantity related to a signal quality value, and the like. The first target offset is a sum of differences between per-cell parameter values and per-frequency parameter values of at least one of the minimum received signal level parameter, the minimum received signal level offset parameter, the power compensation parameter, and the measurement offset parameter; the second target offset is a sum of differences between per-cell parameter values and per-frequency parameter values of at least one of the minimum signal quality parameter, the minimum signal quality offset parameter, and the measurement offset parameter; the first intermediate quantity is related to a per-cell parameter value of at least one of the minimum received signal level parameter, the minimum received signal level offset parameter, the power compensation parameter, and the measurement offset parameter; and the second intermediate quantity is related to a per-cell parameter value of at least one of the minimum signal quality parameter, the minimum signal quality offset parameter, and the measurement offset parameter.

It should be noted that the reselection information may further include a physical cell identifier (Physical Cell Identifier, PCI) of the neighboring cell, where the PCI corresponds to the per-cell reselection parameter. Herein, that the PCI corresponds to the per-cell reselection parameter means that one PCI corresponds to one set of per-cell reselection parameters, that is, one set of per-cell reselection parameters corresponds to one neighboring cell and may jointly represent network performance of the neighboring cell. One set of per-cell reselection parameters may include at least one of the plurality of parameters mentioned above.

Herein, the minimum received signal level parameter, the minimum received signal level offset parameter, the minimum signal quality parameter, the minimum signal quality offset parameter, the power compensation parameter, and the measurement offset parameter are all per-cell parameters of the neighboring cell, that is, parameters that can represent actual network performance of the neighboring cell.

The minimum received signal level parameter is a target minimum received signal level value broadcast by the neighboring cell. To be specific, the per-cell reselection parameter configured by the source cell may include a parameter same as a minimum received signal level value of the neighboring cell that is carried in system information broadcast by the neighboring cell, that is, a parameter Qᵣₓᵢₑᵥₘᵢₙ* used for cell reselection is a parameter Qᵣₓₗₑᵥₘᵢₙ of the neighboring cell that is carried in the system information of the neighboring cell. Alternatively, the minimum received signal level parameter may further include a per-frequency minimum received signal level value corresponding to the neighboring cell and a first offset value, where the first offset value is a difference between the target minimum received signal level value and the per-frequency minimum received signal level value. To be specific, the per-cell reselection parameter configured by the source cell may include a per-frequency minimum received signal level value (the parameter Qᵣₓₗₑᵥₘᵢₙ used for cell reselection) of the frequency of the neighboring cell and the first offset value (an offset between the parameter Qᵣₓₗₑᵥₘᵢₙ of the neighboring cell that is carried in the system information of the neighboring cell and Qᵣₓₗₑᵥₘᵢₙ used for cell reselection and broadcast by the source cell).

Likewise, the minimum received signal level offset parameter is a target minimum received signal level offset value broadcast by the neighboring cell. To be specific, the per-cell reselection parameter configured by the source cell may include a parameter same as a minimum received signal level offset value of the neighboring cell that is carried in system information broadcast by the neighboring cell, that is, a parameter Q_{rxlevminoffset}* used for cell reselection is a parameter Q_{rxlevminoffset} of the neighboring cell that is carried in the system information of the neighboring cell. Alternatively, the minimum received signal level offset parameter includes a per-frequency minimum received signal level offset value corresponding to the neighboring cell and a second offset value, where the second offset value is a difference between the target minimum received signal level offset value and the per-frequency minimum received signal level offset value. To be specific, the per-cell reselection parameter configured by the source cell may include a per-frequency minimum received signal level offset value (the parameter Q_{rxlevminoffset} used for cell reselection) of the frequency of the neighboring cell and the second offset value (an offset between the parameter Q_{rxlevminoffset} of the neighboring cell that is carried in the system information of the neighboring cell and Qᵣₓₗₑᵥₘi_{noffset} used for cell reselection and broadcast by the source cell).

Likewise, the minimum signal quality parameter is a target minimum signal quality value broadcast by the neighboring cell. To be specific, the per-cell reselection parameter configured by the source cell may include a parameter same as a minimum signal quality value of the neighboring cell that is carried in system information broadcast by the neighboring cell, that is, a parameter Q_{qualmin}* used for cell reselection is a parameter Q_{qualmin} of the neighboring cell that is carried in the system information of the neighboring cell. Alternatively, the minimum signal quality parameter includes a per-frequency minimum signal quality value corresponding to the neighboring cell and a third offset value, where the third offset value is a difference between the target minimum signal quality value and the per-frequency minimum signal quality value. To be specific, the per-cell reselection parameter configured by the source cell may include a per-frequency minimum signal quality value (the parameter Q_{qualmin} used for cell reselection) and the third offset value (an offset between the parameter Q_{qualmin} of the neighboring cell that is carried in the system information of the neighboring cell and Q_{qualmin} used for cell reselection and broadcast by the source cell).

Likewise, the minimum signal quality parameter is a target minimum signal quality offset value broadcast by the neighboring cell. To be specific, the per-cell reselection parameter configured by the source cell may include a parameter same as a minimum signal quality offset value of the neighboring cell that is carried in system information broadcast by the neighboring cell, that is, a parameter Q_{qualminoffset}* used for cell reselection is a parameter Q_{qualminoffset} of the neighboring cell that is carried in the system information of the neighboring cell. Alternatively, the minimum signal quality offset parameter includes a per-frequency minimum signal quality offset value corresponding to the neighboring cell and a fourth offset value, where the fourth offset value is a difference between the target minimum signal quality offset value and the per-frequency minimum signal quality offset value. To be specific, the per-cell reselection parameter configured by the source cell may include a per-frequency minimum signal quality offset value (the parameter Q_{qualminoffset} used for cell reselection) of the frequency of the neighboring cell and the fourth offset value (an offset between the parameter Q_{qualminoffset} of the neighboring cell that is carried in the system information of the neighboring cell and Q_{qualminoffset} used for cell reselection and broadcast by the source cell).

Further, the measurement offset parameter includes a connection failure offset parameter (connEstFailOffset) and/or a cell temporary offset parameter (Qoffsetₜₑₘₚ). The measurement offset parameter is a cell measurement offset value broadcast by the neighboring cell. To be specific, the per-cell reselection parameter configured by the source cell may include a parameter same as a measurement offset of the neighboring cell that is carried in system information broadcast by the neighboring cell, that is, a parameter connEstFailOffset* or Qoffsetₜₑₘₚ* used for cell reselection is a parameter connEstFailOffset or Qoffsetₜₑₘₚ of the neighboring cell that is carried in the system information of the neighboring cell. Alternatively, the measurement offset parameter includes a per-frequency measurement offset value corresponding to the neighboring cell and a fifth offset value, where the fifth offset value is an offset between the target measurement offset value and the per-frequency measurement offset value. To be specific, the per-cell reselection parameter configured by the source cell may include a per-frequency measurement offset (such as the parameter connEstFailOffset or Qoffsetₜₑₘₚ used for cell reselection) of the frequency of the neighboring cell and the fifth offset value (an offset between the parameter connEstFailOffset or Qoffsetₜₑₘₚ of the neighboring cell that is carried in the system information of the neighboring cell and connEstFailOffset or Qoffsetₜₑₘₚ used for cell reselection and broadcast by the source cell).

Further, the power compensation parameter is determined based on a maximum power parameter P_{Max} and a power class parameter P_{PowerClass}. The maximum power parameter is a target maximum power value corresponding to the neighboring cell. To be specific, the per-cell reselection parameter configured by the source cell may include a parameter same as a maximum power value of the neighboring cell that is carried in system information broadcast by the neighboring cell, that is, a parameter P_{Max}* used for cell reselection is a parameter P_{Max} of the neighboring cell that is carried in the system information of the neighboring cell. Alternatively, the maximum power parameter includes a per-frequency maximum power value corresponding to the frequency of the neighboring cell and a sixth offset value, where the sixth offset value is a difference between the target maximum power value and the per-frequency maximum power value. To be specific, the per-cell reselection parameter configured by the source cell may include a per-frequency maximum power value (the parameter P_{Max} used for cell reselection) of the frequency of the neighboring cell and the sixth offset value (an offset between the parameter P_{Max} of the neighboring cell that is carried in the system information of the neighboring cell and P_{Max} used for cell reselection and broadcast by the source cell).

The foregoing briefly describes parameters such as the minimum received signal level parameter, the minimum received signal level offset parameter, the minimum signal quality parameter, the minimum signal quality offset parameter, the power compensation parameter, and the measurement offset parameter. The following further describes how to perform cell reselection based on the parameters in this embodiment.

Specifically, step 22 may include:
A1. Calculate a cell-selection received signal level value Srxlev of the neighboring cell based on a measured received signal level value and at least one of the minimum received signal level parameter, the minimum received signal level offset parameter, the power compensation parameter, and the measurement offset parameter in the selection parameter. Herein, the minimum received signal level parameter, the minimum received signal level offset parameter, the power compensation parameter, and the measurement offset parameter are per-cell parameters of the neighboring cell and may represent network performance of the neighboring cell. For example, the terminal may calculate the cell-selection received signal level value Srxlev by referring to the following formula: $Srxlev = {Q}_{rxlevmeas} - \left({Q}_{rxlevlmin}+{Q}_{rxlevminoffset}\right) - {P}_{compensation} - {Qoffset}_{temp} ,$ where Srxlev indicates the cell-selection received signal level value of the neighboring cell, Qᵣₓₗₑᵥₘₑₐₛ indicates an actually measured received signal level value of the neighboring cell, Qᵣₓₗₑᵥₘᵢₙ indicates an actual value of the minimum received signal level parameter of the neighboring cell, Q_{rxlevminoffset} indicates an actual value of the minimum received signal level offset parameter of the neighboring cell, P_{compensation} indicates an actual value of the power compensation parameter of the neighboring cell, and Qoffsetₜₑₘₚ indicates an actual value of the measurement offset parameter of the neighboring cell.

It should be noted that the foregoing formula is used in a calculation scenario in which all of the minimum received signal level parameter, the minimum received signal level offset parameter, the power compensation parameter, and the measurement offset parameter exist. When some values of the parameters are default, the corresponding parameters in the formula may be set to special values, where the special values are prescribed.

B1. Calculate a cell-selection signal quality value of the neighboring cell based on a measured received signal quality value and at least one of the minimum signal quality parameter, the minimum signal quality offset parameter, and the measurement offset parameter in the selection parameter. Herein, the minimum signal quality parameter, the minimum signal quality offset parameter, and the measurement offset parameter are per-cell parameters of the neighboring cell and may represent network performance of the neighboring cell. For example, the terminal may calculate the cell-selection received signal quality value Squal by referring to the following formula: $Squal = {Q}_{qualmeas} - \left({Q}_{qualmin}+{Q}_{qualminoffset}\right) - {Qoffset}_{temp} ,$ where Squal indicates the cell-selection signal quality value of the neighboring cell, Q_{qualmeas} indicates an actually measured signal quality value of the neighboring cell, Q_{qualmin} indicates an actual value of the minimum signal quality parameter of the neighboring cell, Q_{qualminoffset} indicates an actual value of the minimum signal quality offset parameter of the neighboring cell, and Qoffsetₜₑₘₚ indicates the actual value of the measurement offset parameter of the neighboring cell.

It should be noted that the foregoing formula is used in a calculation scenario in which all of the minimum signal quality parameter, the minimum signal quality offset parameter, and the measurement offset parameter exist. When some values of the parameters are default, the corresponding parameters in the formula may be set to special values, where the special values are prescribed.

C1. Perform the cell reselection procedure based on the cell-selection received signal level value, the cell-selection signal quality value, and the reselection condition for reselecting to the neighboring cell.

In addition, the per-cell reselection parameter in some embodiments of this disclosure may further include the first target offset and the second target offset. The first target offset is the sum of the differences between the per-cell parameter values and the per-frequency parameter values of the at least one of the minimum received signal level parameter, the minimum received signal level offset parameter, the power compensation parameter, and the measurement offset parameter; and the second target offset is the sum of the differences between the per-cell parameter values and the per-frequency parameter values of the at least one of the minimum signal quality parameter, the minimum signal quality offset parameter, and the measurement offset parameter.

In some embodiments, the terminal may further perform cell reselection based on the first target offset and the second target offset. Specifically, step 22 may further include:
A2. Calculate a cell-selection received signal level value of the neighboring cell based on a measured received signal level value, a first target parameter value, and the first target offset, where the first target parameter value is the per-frequency parameter value of the at least one of the minimum received signal level parameter, the minimum received signal level offset parameter, the power compensation parameter, and the measurement offset parameter. For example, the terminal may calculate the cell-selection received signal level value Srxlev by referring to the following formula: $Srxlev = {Q}_{rxlevmeas} - \left({Q}_{rxlevlmin}+{Q}_{rxlevminoffset}\right) - {P}_{compensation} - {Qoffset}_{temp} - offset 1 ,$ where Srxlev indicates the cell-selection received signal level value of the neighboring cell, Qᵣₓₗₑᵥₘₑₐₛ indicates an actually measured value of the received signal level parameter of the neighboring cell, Qᵣₓₗₑᵥₘᵢₙ indicates a value of the minimum received signal level parameter of the frequency of the neighboring cell, Q_{rxlevminoffset} indicates a value of the minimum received signal level offset parameter of the frequency of the neighboring cell, P_{compensation} indicates a value of the power compensation parameter of the frequency of the neighboring cell, Qoffsetₜₑₘₚ indicates a value of the measurement offset parameter of the frequency of the neighboring cell, and offset1 indicates the first target parameter value.

It should be noted that offset1 may be the sum of the differences between the per-cell values and the per-frequency values of the at least one of the minimum received signal level parameter, the minimum received signal level offset parameter, the power compensation parameter, and the measurement offset parameter. When values of some parameters in the foregoing formula are default, the parameters may be set to special values.

B2. Calculate a cell-selection signal quality value of the neighboring cell based on a measured received signal quality value, a second target parameter value, and the second target offset, where the second target parameter value is the per-frequency parameter value of the at least one of the minimum signal quality parameter, the minimum signal quality offset parameter, and the measurement offset parameter. For example, the terminal may calculate the cell-selection received signal quality value Squal by referring to the following formula: $Squal = {Q}_{qualmeas} - \left({Q}_{qualmin}+{Q}_{qualminoffset}\right) - {Qoffset}_{temp} - offset 2 ,$ where Squal indicates the cell-selection signal quality value of the neighboring cell, Q_{qualmeas} indicates an actually measured value of the signal quality parameter of the neighboring cell, Q_{qualmin} indicates a value of the minimum signal quality parameter of the frequency of the neighboring cell, Q_{qualminoffset} indicates a value of the minimum signal quality offset parameter of the frequency of the neighboring cell, Qoffsetₜₑₘₚ indicates the value of the measurement offset parameter of the frequency of the neighboring cell, and offset2 indicates the second target parameter value.

It should be noted that offset2 may be the sum of the differences between the per-cell values and the per-frequency values of the at least one of the minimum signal quality parameter, the minimum signal quality offset parameter, and the measurement offset parameter. When values of some parameters in the foregoing formula are default, the parameters may be set to special values.

C2. Perform the cell reselection procedure based on the cell-selection received signal level value, the cell-selection signal quality value, and the reselection condition for reselecting to the neighboring cell.

In addition, the per-cell reselection parameter in some embodiments of this disclosure may further include the first intermediate quantity and the second intermediate quantity. The first intermediate quantity is related to the per-cell parameter value of the at least one of the minimum received signal level parameter, the minimum received signal level offset parameter, the power compensation parameter, and the measurement offset parameter; and the second intermediate quantity is related to the per-cell parameter value of the at least one of the minimum signal quality parameter, the minimum signal quality offset parameter, and the measurement offset parameter.

In some embodiments, the terminal may further perform cell reselection based on the first intermediate quantity and the second intermediate quantity. Specifically, step 22 may further include:
A3. Calculate a cell-selection received signal level value of the neighboring cell based on a measured received signal level value and the first intermediate quantity. For example, the terminal may calculate the cell-selection received signal level value Srxlev by referring to the following formula: $Srxlev = {Q}_{rxlevmeas} - offset 3 ,$ where Srxlev indicates the cell-selection received signal level value of the neighboring cell, Qᵣₓₗₑᵥₘₑₐₛ indicates an actually measured received signal level value of the neighboring cell, and offset3 indicates a result of (Qᵣₓₗₑᵥₘᵢₙ + Q_{rxlevminoffset}) - P_{compensation} - Qoffsetₜₑₘₚ, which is obtained through calculation by using parameter values of the neighboring cell that are carried in the system information of the neighboring cell.

B3. Calculate a cell-selection signal quality value of the neighboring cell based on a measured received signal quality value and the second intermediate quantity. For example, the terminal may calculate the cell-selection received signal quality value Squal by referring to the following formula: $Squal = {Q}_{qualmeas} - offset 4 ,$ where Squal indicates the cell-selection signal quality value of the neighboring cell, Q_{qualmeas} indicates an actually measured signal quality value of the neighboring cell, and offset4 indicates a result of (Q_{qualmin} + Q_{qualminoffset}) - Qoffsetₜₑₘₚ, which is obtained through calculation by using parameter values of the neighboring cell that are carried in the system information of the neighboring cell.

C3. Perform the cell reselection procedure based on the cell-selection received signal level value, the cell-selection signal quality value, and the reselection condition for reselecting to the neighboring cell.

Further, the cell reselection procedure includes: the terminal compares priorities of neighboring cells with a priority of the source cell to obtain a priority comparison result; the terminal determines, based on the priority comparison result, a target reselection condition for reselecting to the neighboring cell; and when the target reselection condition is satisfied, the terminal reselects from the source cell to a target cell, where the target cell is one of the neighboring cells; or when the target reselection condition is not satisfied, the terminal does not perform cell reselection. The terminal may reselect to a high-priority cell, a low-priority cell, or a same-priority cell. The high-priority cell (or referred to as a high-priority frequency), the same-priority cell (or referred to as a same-priority frequency), and the low-priority cell (or referred to as a low-priority frequency) are a result of comparing the priorities of the neighboring cells with the priority of the source cell, that is, obtained by the terminal by comparing the priorities of the neighboring cells that are received from a network device side and calculated, with the priority of the source cell. If a target priority of a neighboring cell is higher than the priority of the source cell, the neighboring cell is a high-priority cell. If a target priority of a neighboring cell is lower than the priority of the source cell, the neighboring cell is a low-priority cell. If a target priority of a neighboring cell is the same as the priority of the source cell, the neighboring cell is a same-priority cell. For example, the source cell of the terminal is an LTE cell, and a priority of an NR cell is received; the source cell of the terminal is an NR cell, and a priority of an LTE cell is received; or the terminal receives both a priority of an NR cell and a priority of an LTE cell. The terminal compares the priority of the source cell of the terminal with the received priority of the neighboring cell, and determines that the neighboring cell is a high-priority cell, a same-priority cell, or a low-priority cell.

The following further describes cell reselection with reference to different scenarios.

Scenario 1: The priority of the neighboring cell is the same as the priority of the source cell, or the neighboring cell and the source cell are on the same frequency.

In this scenario, steps C1, C2, and C3 may be implemented in the following manners:
D1. In a case in which the priorities of the neighboring cells are the same as the priority of the source cell or the neighboring cells and the source cell are on the same frequency, if the cell-selection received signal level values and the cell-selection signal quality values are all greater than 0, rank the source cell and the neighboring cells. To be specific, if an S criterion is satisfied, that is, Srxlev > 0 and Squal > 0, the source cell and the neighboring cells are ranked based on an R criterion.

The source cell and the neighboring cells are ranked by using the following formula: $Rank Rs of the source cell = {Q}_{meas , s} + {Q}_{Hyst} - {Qoffset}_{temp} ;$ and $Rank Rn of the neighboring cell = {Q}_{meas , n} + Qoffset - {Qoffset}_{temp} ;$ where Q_{meas,s} is a measurement value of reference signal received power RSRP of the source cell, Q_{Hyst} is a measurement hysteresis of the source cell, Qoffsetₜₑₘₚ is a measurement offset of the source cell, Q_{meas,n} is a measurement value of RSRP of the neighboring cell, Qoffset is a first measurement offset of the neighboring cell, and Qoffsetₜₑₘₚ is a second measurement offset of the neighboring cell.

D21. If the source cell does not provide a rank threshold, reselect from the source cell to a best ranked cell in the neighboring cells. The rank threshold may be a rangeToBestCell parameter. If the network device (the source cell) does not configure the rangeToBestCell parameter, and a basic reselection condition is satisfied, the terminal initiates a cell reselection procedure to the best ranked cell.

Alternatively, D22. If the source cell provides a rank threshold, reselect from the source cell to one of first cells that has a largest quantity of beams whose quality is higher than a threshold, where the first cell is a cell with a difference between a rank thereof and a rank of a best ranked cell in the neighboring cells being less than the rank threshold. If the source cell is configured with the rangeToBestCell parameter, and the basic reselection condition is satisfied, the terminal selects, from cells with differences between ranks thereof and the rank of the best ranked cell in all the neighboring cells being not greater than rangeToBestCell, a cell that has a largest quantity of beams whose quality is higher than a threshold, and initiates a cell reselection procedure.

The basic reselection condition includes but is not limited to the following: The ranks of the neighboring cells in a reselection time interval Treselection_{RAT} are all better than that of the source cell, and a camping time of the terminal on the current source cell exceeds a preset threshold, such as 1s.

It should be noted that a same-priority neighboring cell and the source cell may be inter-frequency cells, intra-system cells, or inter-system cells. This is not specifically limited in some embodiments of this disclosure.

The cell reselection procedure further includes the following scenario in addition to the foregoing reselection scenario in which the source cell and the neighboring cell have a same priority:
Scenario 2: The priority of the neighboring cell is lower than the priority of the source cell.

In a case in which the priority of the neighboring cell is lower than the priority of the source cell, if a first parameter of the source cell is lower than a first preset threshold, and a second parameter of the neighboring cell exceeds a second preset threshold, the terminal reselects from the source cell to the neighboring cell.

Specifically, in this scenario, when the source cell provides Thresh_{Serving,LowQ} corresponding to Squal of the source cell, if Squal of the source cell is less than Thresh_{Serving,LowQ}, and Squal of the neighboring cell is greater than Thresh_{X,LowQ} or Srxlev of the neighboring cell is greater than Thresh_{X.LowP} in a reselection time period Treselection_{RAT}, the terminal reselects from the source cell to the neighboring cell. To be specific, if the system broadcasts the thresh_{Serving,LowQ} parameter, and the terminal has camped on the source cell for more than one second, if Squal of the serving cell is less than Thresh_{Serving,LowQ}, and Squal of a cell on a low-priority NR/LTE frequency is greater than Thresh_{X,LowQ} in a time interval Treselection_{RAT}, the terminal initiates reselection to the neighboring cell on the low-priority frequency.

Alternatively, when the source cell does not provide Thresh_{Serving,LowQ} corresponding to Squal of the source cell, if Srxlev of the source cell is less than Thresh_{Serving,LowP}, and Srxlev of the neighboring cell is greater than Thresh_{X,LowP} in a reselection time period Treselection_{RAT}, the terminal reselects from the source cell to the neighboring cell. To be specific, if the system does not broadcast the thresh_{Serving,LowQ} parameter, but the terminal has camped on the source cell for more than one second, and Srxlev of the serving cell is less than Thresh_{Serving,LowP}, and Srxlev of a cell on a low-priority NR/LTE frequency is greater than Thresh_{X,LowP} in a time interval Treselection_{RAT}, the terminal initiates reselection to the neighboring cell on the low-priority frequency.

For definitions of the foregoing parameters, refer to the following descriptions. Squal is a cell-selection signal quality value, Srxlev is a cell-selection received signal level value, Thresh_{Serving,LowQ} is a Squal threshold of the source cell, Thresh_{Serving,LowP} is an Srxlev threshold of the source cell, Thresh_{X,LowQ} is a Squal threshold of the neighboring cell, and Thresh_{X,LowP} is an Srxlev threshold of the neighboring cell.

Scenario 3: The priority of the neighboring cell is higher than the priority of the source cell.

In a case in which the target priority of the neighboring cell is higher than the priority of the source cell, if a second parameter of the neighboring cell exceeds a second preset threshold, the terminal reselects from the source cell to the neighboring cell.

In this scenario, when the source cell provides Thresh_{Serving,LowQ} corresponding to Squal of the source cell, if Squal of the neighboring cell is greater than Thresh_{X,HighQ} in a reselection time period Treselection_{RAT}, the terminal reselects from the source cell to the neighboring cell. To be specific, if the system broadcasts the thresh_{Serving,LowQ} parameter, and the terminal has camped on the current source cell for more than one second, if signal quality Squal of a cell on a high-priority NR/LTE frequency is greater than Thresh_{X,HighQ} in a time interval Treselection_{RAT}, the terminal initiates reselection to the neighboring cell on the high-priority frequency.

Alternatively, when the source cell does not provide Thresh_{Serving,LowQ} corresponding to Squal of the source cell, if Srxlev of the neighboring cell is greater than Thresh_{X,HighP} in a reselection time period Treselection_{RAT}, the terminal reselects from the source cell to the neighboring cell. To be specific, if the system does not broadcast the thresh_{Serving,LowQ} parameter, but the terminal has camped on the source cell for more than one second, and Srxlev of a cell on a high-priority frequency is greater than Thresh_{X,HighP} in a time interval or reselection time period Treselection_{RAT}, the terminal initiates reselection to the neighboring cell on the high-priority frequency.

For the foregoing parameters, refer to the following explanations: Squal is a cell-selection signal quality value, Srxlev is a cell-selection received signal level value, Thresh_{Serving,LowQ} is a Squal threshold of the source cell, Thresh_{X,HighQ} is a Squal threshold of the neighboring cell, and Thresh_{X,HighP} is an Srxlev threshold of the neighboring cell.

The reselection information further includes priority information used to indicate the priority of the neighboring cell. The priority information may include base priority information. Assuming that upper limits of frequency priorities corresponding to an LTE cell and an NR cell are different, the base priority information is used to indicate that a frequency priority corresponding to the LTE cell is an integer from 0 to 7, or indicate that a frequency priority corresponding to the NR cell is an integer from 0 to 9. In addition, the priority information may further include base priority information and sub-priority information, where a value granularity of the sub-priority information is less than a value granularity of the base priority. Assuming that upper limits of frequency priorities corresponding to an LTE cell and an NR cell are the same, the base priority information is used to indicate that a frequency priority corresponding to the LTE cell or the NR cell is an integer from 0 to 7. Further, the sub-priority information may include one level of sub-priority information whose value granularity is less than that of a base priority (the value granularity is 1). For example, the sub-priority information is used to indicate one value of sub-priorities {0.2, 0.4, 0.6, 0.8} or {0.1, 0.2, 0.3, 0.4, 0.5, 0.6, 0.7, 0.8, 0.9} that correspond to the NR cell and have a 0.1 value granularity. Alternatively, the sub-priority information may further include at least two levels of sub-priority information with different value granularities. For example, the sub-priority information may indicate one value of sub-priorities {0.2, 0.4, 0.6, 0.8} or {0.1, 0.2, 0.3, 0.4, 0.5, 0.6, 0.7, 0.8, 0.9} that correspond to the NR cell and have a 0.1 value granularity, and one value of sub-priorities {0.01, 0.02, 0.03, 0.04, 0.05, 0.06, 0.07, 0.08, 0.09} that have a 0.01 value granularity. It should be noted that the value granularities 1, 0.1, and 0.01 in some embodiments of this disclosure are examples for description only, and other value granularities in decimal value ranges may also be applied to some embodiments of this disclosure, and specific decimal value ranges of the value granularities may be prescribed by a protocol, configured by the network device, or determined by the network device and the terminal through negotiation.

In the cell reselection method in some embodiments of this disclosure, the terminal can obtain the per-cell reselection parameter of the neighboring cell, and perform cell reselection based on the per-cell reselection parameter. This can ensure that quality of the reselected cell satisfies a camping requirement, and avoid a problem of connection instability of the terminal after cell reselection.

The cell reselection method in different scenarios is separately described in detail in the foregoing embodiments. A terminal corresponding to the cell reselection method is further described in the following embodiments with reference to an accompanying drawing.

As shown in FIG. 3, a terminal 300 in some embodiments of this disclosure can implement details of the method in the foregoing embodiments, that is, obtaining reselection information related to cell reselection, where the reselection information includes a per-cell reselection parameter of a neighboring cell; and performing a cell reselection procedure based on the per-cell reselection parameter and a reselection condition for reselecting to the neighboring cell, and can achieve a same effect. The terminal 300 specifically includes the following functional modules:
an obtaining module 310, configured to obtain reselection information related to cell reselection, where the reselection information includes a per-cell reselection parameter of a neighboring cell; and
a reselection module 320, configured to perform a cell reselection procedure based on the per-cell reselection parameter and a reselection condition for reselecting to the neighboring cell.

The reselection information is configured by a network device in a source cell in which the terminal is located, or the reselection information is obtained from a historically received message.

The per-cell reselection parameter includes at least one of the following parameters:
a minimum received signal level parameter;
a minimum received signal level offset parameter;
a minimum signal quality parameter;
a minimum signal quality offset parameter;
a power compensation parameter;
a measurement offset parameter;
a first target offset, where the first target offset is a sum of differences between per-cell parameter values and per-frequency parameter values of at least one of a minimum received signal level parameter, a minimum received signal level offset parameter, a power compensation parameter, and a measurement offset parameter;
a second target offset, where the second target offset is a sum of differences between per-cell parameter values and per-frequency parameter values of at least one of a minimum signal quality parameter, a minimum signal quality offset parameter, and a measurement offset parameter;
a first intermediate quantity related to a received signal level value, where the first intermediate quantity is related to a per-cell parameter value of at least one of a minimum received signal level parameter, a minimum received signal level offset parameter, a power compensation parameter, and a measurement offset parameter; and
a second intermediate quantity related to a signal quality value, where the second intermediate quantity is related to a per-cell parameter value of at least one of a minimum signal quality parameter, a minimum signal quality offset parameter, and a measurement offset parameter.

The minimum received signal level parameter is a target minimum received signal level value broadcast by the neighboring cell; or
the minimum received signal level parameter includes a per-frequency minimum received signal level value corresponding to the neighboring cell and a first offset value, where the first offset value is a difference between the target minimum received signal level value and the per-frequency minimum received signal level value.

The minimum received signal level offset parameter is a target minimum received signal level offset value broadcast by the neighboring cell; or
the minimum received signal level offset parameter includes a per-frequency minimum received signal level offset value corresponding to the neighboring cell and a second offset value, where the second offset value is a difference between the target minimum received signal level offset value and the per-frequency minimum received signal level offset value.

The minimum signal quality parameter is a target minimum signal quality value broadcast by the neighboring cell; or
the minimum signal quality parameter includes a per-frequency minimum signal quality value corresponding to the neighboring cell and a third offset value, where the third offset value is a difference between the target minimum signal quality value and the per-frequency minimum signal quality value.

The minimum signal quality offset parameter is a target minimum signal quality offset value broadcast by the neighboring cell; or
the minimum signal quality offset parameter includes a per-frequency minimum signal quality offset value corresponding to the neighboring cell and a fourth offset value, where the fourth offset value is a difference between the target minimum signal quality offset value and the per-frequency minimum signal quality offset value.

The measurement offset parameter is a target measurement offset value broadcast by the neighboring cell; or
the measurement offset parameter includes a per-frequency measurement offset value corresponding to the neighboring cell and a fifth offset value, where the fifth offset value is an offset between the target measurement offset value and the per-frequency measurement offset value.

The measurement offset parameter includes a connection failure offset parameter and/or a cell temporary offset parameter.

The power compensation parameter is determined based on a maximum power parameter and a power class parameter.

The maximum power parameter is a target maximum power value corresponding to the neighboring cell; or
the maximum power parameter includes a per-frequency maximum power value corresponding to the neighboring cell and a sixth offset value, where the sixth offset value is a difference between the target maximum power value and the per-frequency maximum power value.

The reselection module 320 includes:
a first calculation submodule, configured to calculate a cell-selection received signal level value of the neighboring cell based on a measured received signal level value and at least one of the minimum received signal level parameter, the minimum received signal level offset parameter, the power compensation parameter, and the measurement offset parameter in the selection parameter;
a second calculation submodule, configured to calculate a cell-selection signal quality value of the neighboring cell based on a measured received signal quality value and at least one of the minimum signal quality parameter, the minimum signal quality offset parameter, and the measurement offset parameter in the selection parameter; and
a reselection submodule, configured to perform the cell reselection procedure based on the cell-selection received signal level value, the cell-selection signal quality value, and the reselection condition for reselecting to the neighboring cell.

The reselection module 320 includes:
a third calculation submodule, configured to calculate a cell-selection received signal level value of the neighboring cell based on a measured received signal level value, a first target parameter value, and the first target offset, where the first target parameter value is the per-frequency parameter value of the at least one of the minimum received signal level parameter, the minimum received signal level offset parameter, the power compensation parameter, and the measurement offset parameter;
a fourth calculation submodule, configured to calculate a cell-selection signal quality value of the neighboring cell based on a measured received signal quality value, a second target parameter value, and the second target offset, where the second target parameter value is the per-frequency parameter value of the at least one of the minimum signal quality parameter, the minimum signal quality offset parameter, and the measurement offset parameter; and
a reselection submodule, configured to perform the cell reselection procedure based on the cell-selection received signal level value, the cell-selection signal quality value, and the reselection condition for reselecting to the neighboring cell.

The reselection module 320 includes:
a fifth calculation submodule, configured to calculate a cell-selection received signal level value of the neighboring cell based on a measured received signal level value and the first intermediate quantity;
a sixth calculation submodule, configured to calculate a cell-selection signal quality value of the neighboring cell based on a measured received signal quality value and the second intermediate quantity; and
a reselection submodule, configured to perform the cell reselection procedure based on the cell-selection received signal level value, the cell-selection signal quality value, and the reselection condition for reselecting to the neighboring cell.

The reselection submodule includes:
a ranking unit, configured to: in a case in which neighboring cells have a same priority as the source cell or neighboring cells are on a same frequency as the source cell, if the cell-selection received signal level values and the cell-selection signal quality values are all greater than 0, rank the source cell and the neighboring cells; and
a first reselection unit, configured to: if the source cell does not provide a rank threshold, reselect from the source cell to a best ranked cell in the neighboring cells; or
a second reselection unit, configured to: if the source cell provides a rank threshold, reselect from the source cell to one of first cells that has a largest quantity of beams whose quality is higher than a threshold, where the first cell is a cell with a difference between a rank thereof and a rank of a best ranked cell in the neighboring cells being less than or equal to the rank threshold.

The reselection submodule includes:
a third reselection unit, configured to: in a case in which a priority of the neighboring cell is lower than a priority of the source cell, when the source cell provides Thresh_{Serving,LowQ} corresponding to Squal of the source cell, if Squal of the source cell is less than Thresh_{Serving,LowQ}, and Squal of the neighboring cell is greater than Thresh_{X,LowQ} or Srxlev of the neighboring cell is greater than Thresh_{X,LowP} in a reselection time period Treselection_{RAT}, reselect from the source cell to the neighboring cell; or
a fourth reselection unit, configured to: when the source cell does not provide Thresh_{Serving,LowQ} corresponding to Squal of the source cell, if Srxlev of the source cell is less than Thresh_{Serving,LowP}, and Srxlev of the neighboring cell is greater than Thresh_{X,LowP} in a reselection time period Treselection_{RAT}, reselect from the source cell to the neighboring cell; where
Squal is a cell-selection signal quality value, Srxlev is a cell-selection received signal level value, Thresh_{Serving,LowQ} is a Squal threshold of the source cell, Thresh_{Serving,LowP} is an Srxlev threshold of the source cell, Thresh_{X,LowQ} is a Squal threshold of the neighboring cell, and Thresh_{X,LowP} is an Srxlev threshold of the neighboring cell.

The reselection submodule includes:
a fifth reselection unit, configured to: in a case in which a priority of the neighboring cell is higher than a priority of the source cell, when the source cell provides Thresh_{Serving,LowQ} corresponding to Squal of the source cell, if Squal of the neighboring cell is greater than Thresh_{X,HighQ} in a reselection time period Treselection_{RAT}, reselect from the source cell to the neighboring cell; or
a sixth reselection unit, configured to: when the source cell does not provide Thresh_{Serving,LowQ} corresponding to Squal of the source cell, if Srxlev of the neighboring cell is greater than Thresh_{X,HighP} in a reselection time period Treselection_{RAT}, reselect from the source cell to the neighboring cell; where
Squal is a cell-selection signal quality value, Srxlev is a cell-selection received signal level value, Thresh_{Serving,LowQ} is a Squal threshold of the source cell, Thresh_{X,HighQ} is a Squal threshold of the neighboring cell, and Thresh_{X,HighP} is an Srxlev threshold of the neighboring cell.

The reselection information further includes a physical cell identifier PCI of the neighboring cell, and the PCI corresponds to the per-cell reselection parameter.

The reselection information further includes priority information used to indicate a priority of the neighboring cell.

The priority information includes base priority information; or
the priority information includes base priority information and sub-priority information, where a value granularity of the sub-priority information is less than a value granularity of the base priority.

It should be noted that the terminal in some embodiments of this disclosure can obtain the per-cell reselection parameter of the neighboring cell, and perform cell reselection based on the per-cell reselection parameter. This can ensure that quality of the reselected cell satisfies a camping requirement, and avoid a problem of connection instability of the terminal after cell reselection.

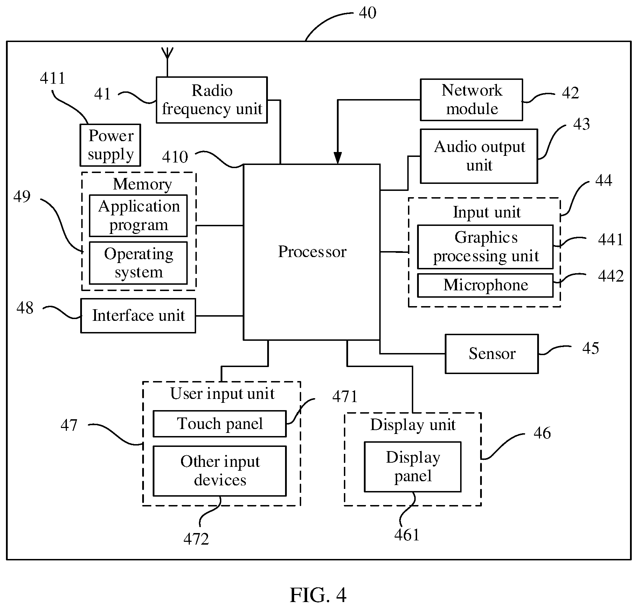

To better achieve the foregoing objective, further, FIG. 4 is a schematic diagram of a hardware structure of a terminal for implementing each embodiment of this disclosure. The terminal 40 includes but is not limited to components such as a radio frequency unit 41, a network module 42, an audio output unit 43, an input unit 44, a sensor 45, a display unit 46, a user input unit 47, an interface unit 48, a memory 49, a processor 410, and a power supply 411. A person skilled in the art may understand that the structure of the terminal shown in FIG. 4 does not constitute a limitation on the terminal. A quantity of components included in the terminal may be greater or less than that shown in the figure, or some components are combined, or component arrangements are different. In some embodiments of this disclosure, the terminal includes but is not limited to a mobile phone, a tablet computer, a laptop computer, a palmtop computer, an in-vehicle terminal, a wearable device, a pedometer, and the like.

The radio frequency unit 41 is configured to obtain reselection information related to cell reselection, where the reselection information includes a per-cell reselection parameter of a neighboring cell.

The processor 410 is configured to perform a cell reselection procedure based on the per-cell reselection parameter and a reselection condition for reselecting to the neighboring cell.

The terminal in some embodiments of this disclosure can obtain the per-cell reselection parameter of the neighboring cell, and perform cell reselection based on the per-cell reselection parameter. This can ensure that quality of the reselected cell satisfies a camping requirement, and avoid a problem of connection instability of the terminal after cell reselection.

It should be understood that in some embodiments of this disclosure, the radio frequency unit 41 may be configured to: receive and send signals in an information receiving/sending process or a call process; and specifically, after receiving downlink data from a base station, send the downlink data to the processor 410 for processing, and in addition, send uplink data to the base station. Generally, the radio frequency unit 41 includes but is not limited to an antenna, at least one amplifier, a transceiver, a coupler, a low noise amplifier, a duplexer, and the like. In addition, the radio frequency unit 41 may further communicate with a network and another device through a wireless communications system.

The terminal provides wireless broadband internet access for a user by using the network module 42, for example, helps the user send and receive e-mails, browse web pages, and access streaming media.

The audio output unit 43 may convert audio data received by the radio frequency unit 41 or the network module 42 or stored in the memory 49 into an audio signal, and output the audio signal as a sound. In addition, the audio output unit 43 may further provide audio output (for example, a call signal reception tone or a message reception tone) that is related to a specific function performed by the terminal 40. The audio output unit 43 includes a speaker, a buzzer, a telephone receiver, and the like.

The input unit 44 is configured to receive an audio or video signal. The input unit 44 may include a graphics processing unit (Graphics Processing Unit, GPU) 441 and a microphone 442. The graphics processing unit 441 processes image data of a static picture or a video that is obtained by an image capture apparatus (for example, a camera) in a video capture mode or an image capture mode. A processed image frame may be displayed on the display unit 46. An image frame processed by the graphics processing unit 441 may be stored in the memory 49 (or another storage medium) or sent by the radio frequency unit 41 or the network module 42. The microphone 442 can receive a sound and can process the sound into audio data. The processed audio data may be converted in a telephone call mode into a format that can be sent by the radio frequency unit 41 to a mobile communications base station, for outputting.

The terminal 40 further includes at least one sensor 45, for example, an optical sensor, a motion sensor, and another sensor. Specifically, the optical sensor includes an ambient light sensor and a proximity sensor. The ambient light sensor may adjust brightness of a display panel 461 based on intensity of ambient light. When the terminal 40 moves near an ear, the proximity sensor may disable the display panel 461 and/or backlight. As a motion sensor, an accelerometer sensor may detect for a value of an acceleration in various directions (there are usually three axes), may detect for a value and a direction of gravity when the terminal is static, and may be configured to recognize a posture of the terminal (for example, landscape/portrait mode switching, a related game, or magnetometer posture calibration), provide a function related to vibration recognition (for example, a pedometer or a keystroke), or the like. The sensor 45 may further include a fingerprint sensor, a pressure sensor, an iris sensor, a molecular sensor, a gyroscope, a barometer, a hygrometer, a thermometer, or an infrared sensor. Details are not described herein.

The display unit 46 is configured to display information input by the user or information provided for the user. The display unit 46 may include the display panel 461. The display panel 461 may be configured in a form of a liquid crystal display (Liquid Crystal Display, LCD), an organic light-emitting diode (Organic Light-Emitting Diode, OLED), or the like.

The user input unit 47 may be configured to receive input digit or character information, and generate a key signal input related to a user setting and function control of the terminal. Specifically, the user input unit 47 includes a touch panel 471 and other input devices 472. The touch panel 471, also referred to as a touchscreen, may capture a touch operation performed by the user on or near the touch panel (for example, an operation performed by the user on the touch panel 471 or near the touch panel 471 by using any appropriate object or accessory such as a finger or a stylus). The touch panel 471 may include two parts: a touch detection apparatus and a touch controller. The touch detection apparatus detects a touch direction of the user, detects a signal carried by a touch operation, and transmits the signal to the touch controller. The touch controller receives touch information from the touch detection apparatus, converts the touch information into point coordinates, sends the point coordinates to the processor 410, and receives and executes a command sent by the processor 410. In addition, the touch panel 471 may be implemented in a plurality of forms, for example, a resistive, capacitive, infrared, or surface acoustic wave touch panel. The user input unit 47 may further include the other input devices 472 in addition to the touch panel 471. Specifically, the other input devices 472 may include but are not limited to a physical keyboard, a function key (such as a volume control key or a power on/off key), a trackball, a mouse, a joystick, and the like. Details are not described herein.

Further, the touch panel 471 may cover the display panel 461. After detecting a touch operation on or near the touch panel 471, the touch panel 471 transmits the touch operation to the processor 410 to determine a type of a touch event. Then the processor 410 provides corresponding visual output on the display panel 461 based on the type of the touch event. In FIG. 4, the touch panel 471 and the display panel 461 serve as two independent components to implement input and output functions of the terminal. However, in some embodiments, the touch panel 471 and the display panel 461 may be integrated to implement the input and output functions of the terminal. This is not specifically limited herein.

The interface unit 48 is an interface for connecting an external apparatus to the terminal 40. For example, the external apparatus may include a wired or wireless headphone port, an external power (or battery charger) port, a wired or wireless data port, a memory card port, a port for connecting an apparatus having a recognition module, an audio input/output (I/O) port, a video I/O port, an earphone port, and the like. The interface unit 48 may be configured to receive input (for example, data information and electric power) from the external apparatus, and transmit the received input to one or more elements in the terminal 40; or may be configured to transmit data between the terminal 40 and the external apparatus.

The memory 49 may be configured to store a software program and various data. The memory 49 may mainly include a program storage area and a data storage area. The program storage area may store an operating system, an application program required for at least one function (such as a sound play function and an image play function), and the like. The data storage area may store data created based on use of the mobile phone (such as audio data and a phone book), and the like. In addition, the memory 49 may include a high-speed random access memory, or may include a non-volatile memory, for example, at least one magnetic disk storage device, a flash memory device, or other volatile solid-state storage devices.

The processor 410 is a control center of the terminal, connects various parts of the entire terminal by using various interfaces and lines, and executes various functions and data processing of the terminal by running or executing a software program and/or a module stored in the memory 49 and invoking data stored in the memory 49, so as to perform overall monitoring on the terminal. The processor 410 may include one or more processing units. Optionally, the processor 410 may integrate an application processor and a modem processor. The application processor mainly processes the operating system, a user interface, the application program, and the like. The modem processor mainly processes wireless communication. It may be understood that the modem processor may alternatively not be integrated into the processor 410.

The terminal 40 may further include a power supply 411 (for example, a battery) that supplies power to each component. Optionally, the power supply 411 may be logically connected to the processor 410 by using a power management system, so as to implement functions such as charging management, discharging management, and power consumption management by using the power management system.

In addition, the terminal 40 includes some functional modules that are not shown. Details are not described herein.

Optionally, some embodiments of this disclosure further provide a terminal, including a processor 410, a memory 49, and a computer program stored in the memory 49 and capable of running on the processor 410. When the computer program is executed by the processor 410, the procedures in the foregoing embodiments of the cell reselection method are implemented, with the same technical effect achieved. To avoid repetition, details are not described again herein. The terminal may be a wireless terminal or a wired terminal. The wireless terminal may be a device providing a user with voice and/or other service data connectivity, a handheld device having a wireless connection function, or another processing device connected to a wireless modem. The wireless terminal may communicate with one or more core networks through a radio access network (Radio Access Network, RAN). The wireless terminal may be a mobile terminal such as a mobile phone (also referred to as a "cellular" phone) or a computer having a mobile terminal, for example, may be a portable, pocket-sized, handheld, computer built-in, or in-vehicle mobile apparatus, which exchanges voice and/or data with the radio access network. For example, it may be a device such as a personal communication service (Personal Communication Service, PCS) phone, a cordless telephone, a session initiation protocol (Session Initiated Protocol, SIP) phone, a wireless local loop (Wireless Local Loop, WLL) station, or a personal digital assistant (Personal Digital Assistant, PDA). The wireless terminal may also be referred to as a system, a subscriber unit (Subscriber Unit), a subscriber station (Subscriber Station), a mobile station (Mobile Station), a mobile terminal (Mobile), a remote station (Remote Station), a remote terminal (Remote Terminal), an access terminal (Access Terminal), a user terminal (User Terminal), a user agent (User Agent), or a user device (User Device or User Equipment). This is not limited herein.

Some embodiments of this disclosure further provide a computer-readable storage medium, where the computer-readable storage medium stores a computer program. When the computer program is executed by a processor, the procedures in the foregoing embodiments of the cell reselection method are implemented, with the same technical effect achieved. To avoid repetition, details are not described again herein. The computer-readable storage medium is, for example, a read-only memory (Read-Only Memory, ROM), a random access memory (Random Access Memory, RAM), a magnetic disk, or an optical disc.

The cell reselection method on the terminal side is described in the foregoing embodiments of this disclosure. A cell reselection method on a network device side is further described in the following embodiments with reference to an accompanying drawing.

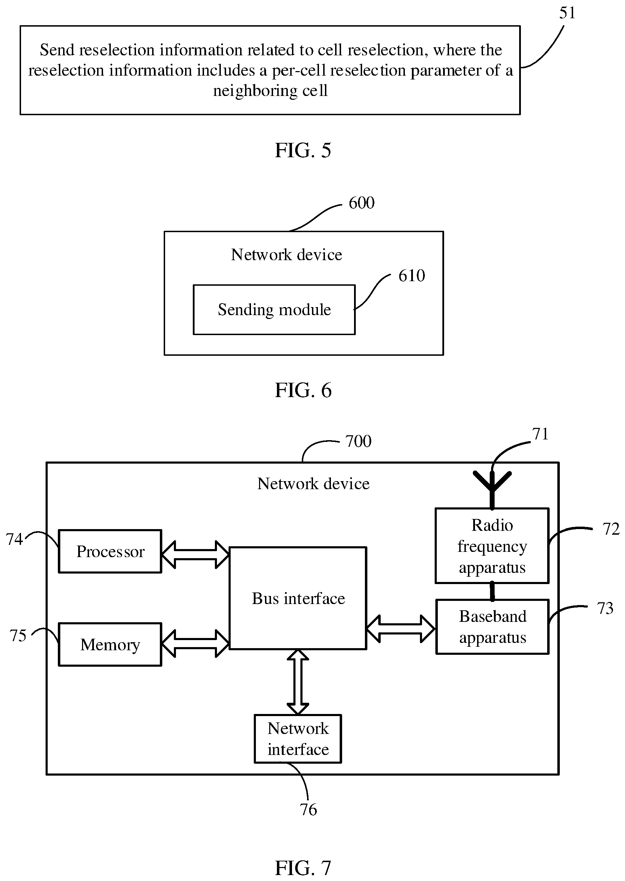

As shown in FIG. 5, a cell reselection method in some embodiments of this disclosure is applied to a network device side. The method includes the following step.

Step 51: Send reselection information related to cell reselection, where the reselection information includes a per-cell reselection parameter of a neighboring cell.

The neighboring cell may be one of cells suitable for reselection, and different neighboring cells may be configured with a same priority or different priorities. A cell suitable for reselection is a cell on which a terminal can camp and obtain a normal service. The terminal needs to have a valid USIM, and satisfy the condition that a cell suitable for reselection satisfies in the foregoing embodiments on the terminal side. Details are not described again herein.

The reselection information may be configured by a source cell (or referred to as a serving cell or a current cell) for the terminal. For example, the reselection information may be configured by the source cell for the terminal by using radio resource control (Radio Resource Control, RRC) signaling and/or broadcast to the terminal by using system information. The RRC signaling may be an RRC release (RRC release) message or the like. The system information may be a SIB2, a SIB4, a SIB5, or the like.

The per-cell reselection parameter in some embodiments of this disclosure is a parameter that can represent actual network performance of the neighboring cell. The reselection information may further include a per-frequency reselection parameter of the neighboring cell, where the per-frequency reselection parameter is a parameter that can represent network performance of a frequency of the neighboring cell. Specifically, the per-cell reselection parameter includes at least one of the following parameters: a minimum received signal level parameter, a minimum received signal level offset parameter, a minimum signal quality value parameter, a minimum signal quality offset parameter, a power compensation value parameter, a measurement offset parameter, a first target offset, a second target offset, a first intermediate quantity related to a received signal level value, a second intermediate quantity related to a signal quality value, and the like. The first target offset is a sum of differences between per-cell parameter values and per-frequency parameter values of at least one of the minimum received signal level parameter, the minimum received signal level offset parameter, the power compensation parameter, and the measurement offset parameter; the second target offset is a sum of differences between per-cell parameter values and per-frequency parameter values of at least one of the minimum signal quality parameter, the minimum signal quality offset parameter, and the measurement offset parameter; the first intermediate quantity is related to a per-cell parameter value of at least one of the minimum received signal level parameter, the minimum received signal level offset parameter, the power compensation parameter, and the measurement offset parameter; and the second intermediate quantity is related to a per-cell parameter value of at least one of the minimum signal quality parameter, the minimum signal quality offset parameter, and the measurement offset parameter. For explanations and descriptions about the foregoing parameters, refer to the embodiments on the terminal side. Details are not described again in the embodiments on the network device side.

It should be noted that the reselection information may further include a PCI of the neighboring cell, where the PCI corresponds to the per-cell reselection parameter. Herein, that the PCI corresponds to the per-cell reselection parameter means that one PCI corresponds to one set of per-cell reselection parameters, that is, one set of per-cell reselection parameters corresponds to one neighboring cell and may jointly represent network performance of the neighboring cell. One set of per-cell reselection parameters may include at least one of the plurality of parameters mentioned above.

The reselection information further includes priority information used to indicate a priority of the neighboring cell. The priority information may include base priority information. In addition, the priority information may further include base priority information and sub-priority information, where a value granularity of the sub-priority information is less than a value granularity of the base priority. Further, the sub-priority information may include one level of sub-priority information whose value granularity is less than that of a base priority (the value granularity is 1); or the sub-priority information may further include at least two levels of sub-priority information with different value granularities. It should be noted that specific decimal value ranges of the value granularities in some embodiments of this disclosure may be prescribed by a protocol, configured by the network device, or determined by the network device and the terminal through negotiation.

In the cell reselection method in some embodiments of this disclosure, the network device configures the per-cell reselection parameter of the neighboring cell for the terminal. This can ensure that the terminal performs cell reselection based on the per-cell reselection parameter, ensure that quality of the reselected cell satisfies a camping requirement, and avoid a problem of connection instability of the terminal after cell reselection.

The cell reselection method in different scenarios is separately described in detail in the foregoing embodiments. A network device corresponding to the cell reselection method is further described in the following embodiments with reference to an accompanying drawing.

As shown in FIG. 6, a network device 600 in some embodiments of this disclosure can implement details of the method in the foregoing embodiments, that is, sending reselection information related to cell reselection, where the reselection information includes a per-cell reselection parameter of a neighboring cell, and can achieve a same effect. The network device 600 specifically includes the following functional module:
a sending module 610, configured to send reselection information related to cell reselection, where the reselection information includes a per-cell reselection parameter of a neighboring cell.

The per-cell reselection parameter includes at least one of the following parameters:
a minimum received signal level parameter;
a minimum received signal level offset parameter;
a minimum signal quality parameter;
a minimum signal quality offset parameter;
a power compensation parameter;
a measurement offset parameter;
a first target offset, where the first target offset is a sum of differences between per-cell parameter values and per-frequency parameter values of at least one of a minimum received signal level parameter, a minimum received signal level offset parameter, a power compensation parameter, and a measurement offset parameter;
a second target offset, where the second target offset is a sum of differences between per-cell parameter values and per-frequency parameter values of at least one of a minimum signal quality parameter, a minimum signal quality offset parameter, and a measurement offset parameter;
a first intermediate quantity related to a received signal level value, where the first intermediate quantity is related to a per-cell parameter value of at least one of a minimum received signal level parameter, a minimum received signal level offset parameter, a power compensation parameter, and a measurement offset parameter; and
a second intermediate quantity related to a signal quality value, where the second intermediate quantity is related to a per-cell parameter value of at least one of a minimum signal quality parameter, a minimum signal quality offset parameter, and a measurement offset parameter.

The minimum received signal level parameter is a target minimum received signal level value broadcast by the neighboring cell; or
the minimum received signal level parameter includes a per-frequency minimum received signal level value corresponding to the neighboring cell and a first offset value, where the first offset value is a difference between the target minimum received signal level value and the per-frequency minimum received signal level value.

The minimum received signal level offset parameter is a target minimum received signal level offset value broadcast by the neighboring cell; or
the minimum received signal level offset parameter includes a per-frequency minimum received signal level offset value corresponding to the neighboring cell and a second offset value, where the second offset value is a difference between the target minimum received signal level offset value and the per-frequency minimum received signal level offset value.

The minimum signal quality parameter is a target minimum signal quality value broadcast by the neighboring cell; or
the minimum signal quality parameter includes a per-frequency minimum signal quality value corresponding to the neighboring cell and a third offset value, where the third offset value is a difference between the target minimum signal quality value and the per-frequency minimum signal quality value.

The minimum signal quality offset parameter is a target minimum signal quality offset value broadcast by the neighboring cell; or
the minimum signal quality offset parameter includes a per-frequency minimum signal quality offset value corresponding to the neighboring cell and a fourth offset value, where the fourth offset value is a difference between the target minimum signal quality offset value and the per-frequency minimum signal quality offset value.

The measurement offset parameter is a target measurement offset value broadcast by the neighboring cell; or
the measurement offset parameter includes a per-frequency measurement offset value corresponding to the neighboring cell and a fifth offset value, where the fifth offset value is an offset between the target measurement offset value and the per-frequency measurement offset value.

The measurement offset parameter includes a connection failure offset parameter and/or a cell temporary offset parameter.

The power compensation parameter is determined based on a maximum power parameter and a power class parameter.

The maximum power parameter is a target maximum power value corresponding to the neighboring cell; or
the maximum power parameter includes a per-frequency maximum power value corresponding to the neighboring cell and a sixth offset value, where the sixth offset value is a difference between the target maximum power value and the per-frequency maximum power value.

The reselection information further includes a physical cell identifier PCI of the neighboring cell, and the PCI corresponds to the per-cell reselection parameter.

The reselection information further includes priority information used to indicate a priority of the neighboring cell.

The priority information includes base priority information; or
the priority information includes base priority information and sub-priority information, where a value granularity of the sub-priority information is less than a value granularity of the base priority.

It should be noted that the network device in some embodiments of this disclosure configures the per-cell reselection parameter of the neighboring cell for the terminal. This can ensure that the terminal performs cell reselection based on the per-cell reselection parameter, ensure that quality of the reselected cell satisfies a camping requirement, and avoid a problem of connection instability of the terminal after cell reselection.

It should be understood that division of modules of the network device and the terminal is merely logical function division. The modules may be all or partially integrated in a physical entity or may be separated physically in an actual implementation. In addition, the modules may be all implemented in a form of software invoked by a processing component, or may be all implemented in a form of hardware; or a part of modules may be implemented in a form of software invoked by a processing component, and another part of modules may be implemented in a form of hardware. For example, a determining module may be a processing component that is separately disposed, or may be integrated in a chip of the apparatus for implementation. In addition, the determining module may be stored in the memory of the apparatus in a form of program code, and is invoked by a processing component of the apparatus to perform a function of the determining module. Implementation of other modules is similar to this. In addition, the modules may be all or partially integrated, or may be implemented independently. Herein, the processing component may be an integrated circuit, and has a signal processing capability. In an implementation process, steps in the foregoing method or the foregoing modules can be implemented by using a hardware integrated logical circuit in the processor component, or by using instructions in a form of software.

For example, the modules may be configured as one or more integrated circuits for implementing the foregoing method, for example, one or more application-specific integrated circuits (Application-Specific Integrated Circuit, ASIC), or one or more microprocessors (digital signal processor, DSP), or one or more field programmable gate arrays (Field Programmable Gate Array, FPGA). For another example, when one of the foregoing modules is implemented in a form of program code invoked by the processing component, the processing component may be a general processor, for example, a central processing unit (Central Processing Unit, CPU) or another processor that may invoke program code. For another example, the modules may be integrated and implemented in a form of a system-on-a-chip (system-on-a-chip, SOC).

To better achieve the foregoing objective, some embodiments of this disclosure further provide a network device. The network device includes a processor, a memory, and a computer program stored in the memory and capable of running on the processor. When the processor executes the computer program, steps of the foregoing cell reselection method are implemented. An embodiment of the present invention further provides a computer-readable storage medium, where the computer-readable storage medium stores a computer program, and when the computer program is executed by a processor, the steps of the foregoing cell reselection method are implemented.

Specifically, some embodiments of this disclosure further provide a network device. As shown in FIG. 7, the network device 700 includes an antenna 71, a radio frequency apparatus 72, and a baseband apparatus 73. The antenna 71 is connected to the radio frequency apparatus 72. In an uplink direction, the radio frequency apparatus 72 receives information by using the antenna 71, and sends the received information to the baseband apparatus 73 for processing. In a downlink direction, the baseband apparatus 73 processes to-be-sent information, and sends the information to the radio frequency apparatus 72; and the radio frequency apparatus 72 processes the received information and then sends the information out by using the antenna 71.

The frequency band processing apparatus may be located in the baseband apparatus 73. The method performed by the network device in the foregoing embodiments may be implemented in the baseband apparatus 73, and the baseband apparatus 73 includes a processor 74 and a memory 75.

The baseband apparatus 73 may include, for example, at least one baseband processing unit, where a plurality of chips are disposed on the baseband processing unit. As shown in FIG. 7, one of the chips is, for example, the processor 74, connected to the memory 75, to invoke a program in the memory 75 to perform the operation of the network device shown in the foregoing method embodiments.

The baseband apparatus 73 may further include a network interface 76, configured to exchange information with the radio frequency apparatus 72, where the interface is, for example, a common public radio interface (common public radio interface, CPRI for short).

Herein, the processor may be one processor, or may be a collective term for a plurality of processing components. For example, the processor may be a CPU, or may be an ASIC, or is configured as one or more integrated circuits for implementing the method performed by the network device, for example, one or more microprocessors DSPs, or one or more field programmable gate arrays FPGAs. A storage component may be a memory, or may be a collective term for a plurality of storage components.

The memory 75 may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), which is used as an external cache. For illustrative rather than restrictive description, a plurality of forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 75 described in this application is intended to include but is not limited to these and any other suitable types of memories.

Specifically, the network device in some embodiments of this disclosure further includes a computer program stored in the memory 75 and capable of running on the processor 74. The processor 74 invokes the computer program in the memory 75 to perform the method performed by the modules shown in FIG. 6.

Specifically, when being invoked by the processor 74, the computer program may be configured to send reselection information related to cell reselection, where the reselection information includes a per-cell reselection parameter of a neighboring cell.

The network device in some embodiments of this disclosure configures the per-cell reselection parameter of the neighboring cell for the terminal. This can ensure that the terminal performs cell reselection based on the per-cell reselection parameter, ensure that quality of the reselected cell satisfies a camping requirement, and avoid a problem of connection instability of the terminal after cell reselection.

A person of ordinary skill in the art may be aware that the units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this disclosure.

It may be clearly understood by a person skilled in the art that, for the purpose of convenient and brief description, for a detailed working process of the foregoing system, apparatus, and unit, reference may be made to a corresponding process in the foregoing method embodiments, and details are not described again herein.

In the embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be indirect couplings or communication connections through some interfaces, apparatuses or units, and may be in electrical, mechanical, or other forms.

The units described as separate components may or may not be physically separate. Components displayed as units may or may not be physical units, that is, they may be located in one position, or may be distributed on a plurality of network units. Some or all of the units may be selected based on actual requirements to achieve the objectives of the solutions of the embodiments.

In addition, functional units in the embodiments of this disclosure may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this disclosure essentially, or the part contributing to related technologies, or some of the technical solutions may be embodied in a form of a software product. The computer software product is stored in a storage medium, and includes instructions for enabling a computer device (which may be a personal computer, a server, a network device, or the like) to perform all or some of the steps of the methods described in the embodiments of this disclosure. The foregoing storage medium includes: any medium that can store program code, such as a USB flash drive, a removable hard disk, a ROM, a RAM, a magnetic disk, or an optical disc.

In addition, it should be noted that in the apparatus and method of this disclosure, apparently, the components or steps may be decomposed and/or recombined. The decomposition and/or recombination should be considered as an equivalent solution of this disclosure. In addition, steps for performing the foregoing series of processing may be naturally performed in a sequence of description and in a time sequence, but do not need to be performed necessarily in the time sequence, and some steps may be performed in parallel or independently. A person of ordinary skill in the art can understand that all or any steps or components of the method and apparatus in this disclosure may be implemented by hardware, firmware, software, or a combination thereof in any computing apparatus (including a processor, a storage medium, and the like) or a network of computing apparatuses. This can be implemented as long as a person of ordinary skill in the art applies basic programming skill after reading the specification of this disclosure.

Therefore, an objective of this disclosure may also be achieved by running a program or a group of programs on any computing apparatus. The computing apparatus may be a well-known general apparatus. Therefore, the objective of this disclosure may also be achieved by merely providing a program product including program code for implementing the method or apparatus. To be specific, the program product also constitutes this disclosure, and a storage medium storing the program product also constitutes this disclosure. Apparently, the storage medium may be any well-known storage medium or any storage medium that will be developed in the future. It should also be noted that in the apparatus and method of this disclosure, apparently, the components or steps may be decomposed and/or recombined. The decomposition and/or recombination should be considered as an equivalent solution of this disclosure. In addition, steps for performing the foregoing series of processing may be naturally performed in a sequence of description and in a time sequence, but do not need to be performed necessarily in the time sequence. Some steps may be performed in parallel or independently.

The foregoing descriptions are merely optional implementations of this disclosure. It should be noted that a person of ordinary skill in the art may make several improvements or polishing without departing from the principle of this disclosure and the improvements and polishing shall fall within the protection scope of the claims.

## Claims

1. A cell reselection method, applied to a terminal and comprising:
obtaining (21), from a network device, reselection information related to cell reselection, wherein the reselection information comprises a per-cell reselection parameter of a neighboring cell; and
performing (22) a cell reselection procedure based on the per-cell reselection parameter and a reselection condition for reselecting to the neighboring cell;
wherein the cell reselection is from a source cell to a target cell, and the target cell is the neighboring cell;
the reselection information is configured by the network device in the source cell in which the terminal is located, or the reselection information is obtained from a historically received message;
wherein the per-cell reselection parameter comprises:
a power compensation parameter;
the power compensation parameter is determined based on a maximum power parameter and a power class parameter;
the maximum power parameter comprises a per-frequency maximum power value corresponding to the neighboring cell and a sixth offset value, wherein the sixth offset value is a difference between a target maximum power value and the per-frequency maximum power value.

2. The cell reselection method according to claim 1, wherein the per-cell reselection parameter further comprises at least one of the following parameters:
a minimum received signal level parameter;
a minimum signal quality parameter;
a minimum received signal level offset parameter;
a minimum signal quality offset parameter;
a measurement offset parameter;
a first target offset, wherein the first target offset is a sum of differences between per-cell parameter values and per-frequency parameter values of at least one of a minimum received signal level parameter, a minimum received signal level offset parameter, a power compensation parameter, and a measurement offset parameter;
a second target offset, wherein the second target offset is a sum of differences between per-cell parameter values and per-frequency parameter values of at least one of a minimum signal quality parameter, a minimum signal quality offset parameter, and a measurement offset parameter;
a first intermediate quantity related to a received signal level value, wherein the first intermediate quantity is related to a per-cell parameter value of at least one of a minimum received signal level parameter, a minimum received signal level offset parameter, a power compensation parameter, and a measurement offset parameter; and
a second intermediate quantity related to a signal quality value, wherein the second intermediate quantity is related to a per-cell parameter value of at least one of a minimum signal quality parameter, a minimum signal quality offset parameter, and a measurement offset parameter; wherein
the minimum received signal level offset parameter comprises a per-frequency minimum received signal level offset value corresponding to the neighboring cell and a second offset value, wherein the second offset value is a difference between the target minimum received signal level offset value and the per-frequency minimum received signal level offset value;
the minimum signal quality offset parameter comprises a per-frequency minimum signal quality offset value corresponding to the neighboring cell and a fourth offset value, wherein the fourth offset value is a difference between the target minimum signal quality offset value and the per-frequency minimum signal quality offset value;
the measurement offset parameter comprises a per-frequency measurement offset value corresponding to the neighboring cell and a fifth offset value, wherein the fifth offset value is an offset between the target measurement offset value and the per-frequency measurement offset value;
wherein the minimum received signal level parameter comprises a per-frequency minimum received signal level value corresponding to the neighboring cell and a first offset value, wherein the first offset value is a difference between a target minimum received signal level value and the per-frequency minimum received signal level value;
the minimum signal quality parameter comprises a per-frequency minimum signal quality value corresponding to the neighboring cell and a third offset value, wherein the third offset value is a difference between the target minimum signal quality value and the per-frequency minimum signal quality value.

3. The cell reselection method according to claim 2, wherein the step of performing a cell reselection procedure based on the per-cell reselection parameter and a reselection condition for reselecting to the neighboring cell comprises:
calculating a cell-selection received signal level value of the neighboring cell based on a measured received signal level value and at least one of the minimum received signal level parameter, the minimum received signal level offset parameter, the power compensation parameter, and the measurement offset parameter in the selection parameter;
calculating a cell-selection signal quality value of the neighboring cell based on a measured received signal quality value and at least one of the minimum signal quality parameter, the minimum signal quality offset parameter, and the measurement offset parameter in the selection parameter; and
performing the cell reselection procedure based on the cell-selection received signal level value, the cell-selection signal quality value, and the reselection condition for reselecting to the neighboring cell.

4. The cell reselection method according to claim 2, wherein the step of performing a cell reselection procedure based on the reselection parameter and a reselection condition for reselecting to the neighboring cell comprises:
calculating a cell-selection received signal level value of the neighboring cell based on a measured received signal level value, a first target parameter value, and the first target offset, wherein the first target parameter value is the per-frequency parameter value of the at least one of the minimum received signal level parameter, the minimum received signal level offset parameter, the power compensation parameter, and the measurement offset parameter;
calculating a cell-selection signal quality value of the neighboring cell based on a measured received signal quality value, a second target parameter value, and the second target offset, wherein the second target parameter value is the per-frequency parameter value of the at least one of the minimum signal quality parameter, the minimum signal quality offset parameter, and the measurement offset parameter; and
performing the cell reselection procedure based on the cell-selection received signal level value, the cell-selection signal quality value, and the reselection condition for reselecting to the neighboring cell.

5. The cell reselection method according to claim 2, wherein the step of performing a cell reselection procedure based on the reselection parameter and a reselection condition for reselecting to the neighboring cell comprises:
calculating a cell-selection received signal level value of the neighboring cell based on a measured received signal level value and the first intermediate quantity;
calculating a cell-selection signal quality value of the neighboring cell based on a measured received signal quality value and the second intermediate quantity; and
performing the cell reselection procedure based on the cell-selection received signal level value, the cell-selection signal quality value, and the reselection condition for reselecting to the neighboring cell.

6. A terminal (300), comprising: a processor, a memory, and a computer program stored in the memory and capable of running on the processor, wherein when the computer program is executed by the processor, the steps of the cell reselection method according to any one of claims 1 to 5 are implemented.

7. A cell reselection method, applied to a network device and comprising:
sending (51), to a terminal, reselection information related to cell reselection, wherein the reselection information comprises a per-cell reselection parameter of a neighboring cell;
wherein the cell reselection is from a source cell to a target cell, and the target cell is the neighboring cell;
the reselection information is configured by the network device in the source cell in which the terminal is located, or the reselection information is obtained from a historically received message;
wherein the per-cell reselection parameter comprises:
a power compensation parameter;
the power compensation parameter is determined based on a maximum power parameter and a power class parameter;
the maximum power parameter comprises a per-frequency maximum power value corresponding to the neighboring cell and a sixth offset value, wherein the sixth offset value is a difference between a target maximum power value and the per-frequency maximum power value

8. The cell reselection method according to claim 7, wherein the per-cell reselection parameter further comprises at least one of the following parameters:
a minimum received signal level parameter;
a minimum signal quality parameter;
a minimum received signal level offset parameter;
a minimum signal quality offset parameter;
a measurement offset parameter;
a first target offset, wherein the first target offset is a sum of differences between per-cell parameter values and per-frequency parameter values of at least one of a minimum received signal level parameter, a minimum received signal level offset parameter, a power compensation parameter, and a measurement offset parameter;
a second target offset, wherein the second target offset is a sum of differences between per-cell parameter values and per-frequency parameter values of at least one of a minimum signal quality parameter, a minimum signal quality offset parameter, and a measurement offset parameter;
a first intermediate quantity related to a received signal level value, wherein the first intermediate quantity is related to a per-cell parameter value of at least one of a minimum received signal level parameter, a minimum received signal level offset parameter, a power compensation parameter, and a measurement offset parameter; and
a second intermediate quantity related to a signal quality value, wherein the second intermediate quantity is related to a per-cell parameter value of at least one of a minimum signal quality parameter, a minimum signal quality offset parameter, and a measurement offset parameter; wherein
the minimum received signal level offset parameter comprises a per-frequency minimum received signal level offset value corresponding to the neighboring cell and a second offset value, wherein the second offset value is a difference between the target minimum received signal level offset value and the per-frequency minimum received signal level offset value;
the minimum signal quality offset parameter comprises a per-frequency minimum signal quality offset value corresponding to the neighboring cell and a fourth offset value, wherein the fourth offset value is a difference between the target minimum signal quality offset value and the per-frequency minimum signal quality offset value;
the measurement offset parameter comprises a per-frequency measurement offset value corresponding to the neighboring cell and a fifth offset value, wherein the fifth offset value is an offset between the target measurement offset value and the per-frequency measurement offset value;
wherein the minimum received signal level parameter comprises a per-frequency minimum received signal level value corresponding to the neighboring cell and a first offset value, wherein the first offset value is a difference between a target minimum received signal level value and the per-frequency minimum received signal level value;
the minimum signal quality parameter comprises a per-frequency minimum signal quality value corresponding to the neighboring cell and a third offset value, wherein the third offset value is a difference between the target minimum signal quality value and the per-frequency minimum signal quality value.

9. A network device (600), comprising: a processor, a memory, and a computer program stored in the memory and capable of running on the processor, wherein when the computer program is executed by the processor, the steps of the cell reselection method according to any one of claims 7 to 8 are implemented.

## Patentansprüche

1. Ein Zellneuauswahlverfahren, das auf ein Endgerät angewendet wird und Folgendes umfasst:
Erhalten (21) von Neuauswahlinformationen bezüglich der Zellneuauswahl von einer Netzwerkvorrichtung, wobei die Neuauswahlinformationen einen zellspezifischen Neuauswahlparameter einer Nachbarzelle umfassen;
Ein Durchführen (22) eines Zellneuauswahlvorgangs auf Grundlage des zellspezifischen Neuauswahlparameters und einer Neuauswahlbedingung für die Neuauswahl zur Nachbarzelle;
wobei die Zellneuauswahl von einer Quellzelle zu einer Zielzelle erfolgt und die Zielzelle die Nachbarzelle ist;
die Neuauswahlinformationen werden von der Netzwerkvorrichtung in der Quellzelle konfiguriert, in der sich das Endgerät befindet, oder die Neuauswahlinformationen werden aus einer früher empfangenen Nachricht erhalten;
wobei der zellspezifische Neuauswahlparameter Folgendes umfasst:
einen Leistungskompensationsparameter;
der Leistungskompensationsparameter wird auf Grundlage eines Maximalleistungsparameters und eines Leistungsklassenparameters bestimmt;
der Maximalleistungsparameter umfasst einen frequenzbezogenen Maximalleistungswert, der der Nachbarzelle entspricht, und einen sechsten Offsetwert, wobei der sechste Offsetwert eine Differenz zwischen einem Zielmaximalleistungswert und dem frequenzbezogenen Maximalleistungswert ist.

2. Das Zellneuauswahlverfahren nach Anspruch 1, wobei der zellspezifische Neuauswahlparameter ferner mindestens einen der folgenden Parameter umfasst:
einen Mindestempfangssignalpegelparameter;
einen Mindestsignalqualitätsparameter;
einen Mindestempfangssignalpegel-Offsetparameter;
einen Mindestsignalqualitäts-Offsetparameter;
einen Messoffsetparameter;
einen ersten Zieloffset, wobei der erste Zieloffset eine Summe von Differenzen zwischen zellspezifischen Parameterwerten und frequenzbezogenen Parameterwerten von mindestens einem von einem Mindestempfangssignalpegelparameter, einem Mindestempfangssignalpegel-Offsetparameter, einem Leistungskompensationsparameter, und einem Messoffsetparameter ist;
einen zweiten Zieloffset, wobei der zweite Zieloffset eine Summe von Differenzen zwischen zellspezifischen Parameterwerten und frequenzbezogenen Parameterwerten von mindestens einem von einem Mindestsignalqualitätsparameter, einem Mindestsignalqualitäts-Offsetparameter und einem Messoffsetparameter ist;
eine erste Zwischengröße, die sich auf einen Empfangssignalpegelwert bezieht, wobei die erste Zwischengröße sich auf einen zellbezogenen Parameterwert von mindestens einem von einem Mindestempfangssignalpegelparameter, einem Mindestempfangssignalpegel-Offsetparameter, einem Leistungskompensationsparameter und einem Messoffsetparameter bezieht; und
eine zweite Zwischengröße, die sich auf einen Signalqualitätswert bezieht, wobei die zweite Zwischengröße sich auf einen zellbezogenen Parameterwert von mindestens einem von einem Mindestsignalqualitätsparameter, einem Mindestsignalqualitäts-Offsetparameter und einem Messoffsetparameter bezieht; wobei
der Mindestempfangssignalpegel-Offsetparameter einen frequenzbezogenen Mindest-empfangssignalpegel-Offsetwert, der der Nachbarzelle entspricht, und einen zweiten Offsetwert umfasst, wobei der zweite Offsetwert eine Differenz zwischen dem Ziel-Mindestempfangssignalpegel-Offsetwert und dem frequenzbezogenen Mindestempfangssignalpegel-Offsetwert ist; der Mindestsignalqualitäts-Offsetparameter einen frequenzbezogenen Mindestsignalqualitäts-Offsetwert, der der Nachbarzelle entspricht, und einen vierten Offsetwert umfasst, wobei der vierte Offset-wert eine Differenz zwischen dem Ziel-Mindestsignalqualitäts-Offsetwert und dem frequenzbezogenen Mindestsignalqualitäts-Offsetwert ist;
der Messoffsetparameter einen frequenzbezogenen Messoffsetwert umfasst, der der Nachbarzelle entspricht, und einen fünften Offsetwert, wobei der fünfte Offsetwert ein Offset zwischen dem Ziel-Messoffsetwert und dem frequenzbezogenen Messoffsetwert ist;
wobei der Mindestempfangssignalpegelparameter einen frequenzbezogenen Mindestempfangssignalpegelwert, der der Nachbarzelle entspricht, und einen ersten Offsetwert umfasst, wobei der erste Offsetwert eine Differenz zwischen einem Ziel-Mindestempfangssignalpegelwert und dem frequenz-bezogenen Mindestempfangssignalpegelwert ist;
der Mindestsignalqualitätsparameter einen frequenzbezogenen Mindestsignalqualitätswert, der der Nachbarzelle entspricht, und einen dritten Offsetwert umfasst, wobei der dritte Offsetwert eine Differenz zwischen dem Ziel-Mindestsignalqualitätswert und dem frequenzbezogenen Mindestsignal-qualitätswert ist.

3. Das Zellneuauswahlverfahren nach Anspruch 2, wobei der Schritt des Durchführens eines Zellneuauswahlverfahrens auf der Grundlage des zellbezogenen Neuauswahlparameters und einer Neuauswahlbedingung zum Neuauswählen der Nachbarzelle umfasst:
Berechnen eines Zellauswahl-Empfangssignalpegelwerts der Nachbarzelle auf der Grundlage eines gemessenen Empfangssignalpegelwerts und mindestens eines von dem Mindestempfangssignalpegelparameter, dem Mindestempfangssignalpegel-Offsetparameter, dem Leistungskompensationsparameter und dem Messoffsetparameters in dem Auswahlparameter;
Berechnen eines Signalqualitätswerts für die Zellauswahl der Nachbarzelle auf Grundlage eines gemessenen Empfangssignalqualitätswerts und mindestens eines von dem Mindestsignalqualitätsparameter, dem Mindestsignalqualitätsoffsetparameter und dem Messoffsetparameter in dem Auswahlparameter; und
Durchführen des Zellneuauswahlverfahrens auf Grundlage des Empfangssignalpegelwerts für die Zellauswahl, des Signalqualitätswerts für die Zellauswahl und der Neuauswahlbedingung für die Neuauswahl zu der benachbarten Zelle.

4. Das Zellneuauswahlverfahren nach Anspruch 2, wobei der Schritt des Durchführens eines Zellneuauswahlverfahrens auf Grundlage des Neuauswahlparameters und einer Neuauswahlbedingung für die Neuauswahl zu der Nachbarzelle umfasst:
Berechnen eines Empfangssignalpegelwerts für die Zellauswahl der Nachbarzelle auf Grundlage eines gemessenen Empfangssignalpegelwerts, eines ersten Zielparameterwerts und des ersten Zieloffsets, wobei der erste Zielparameterwert der frequenzbezogene Parameterwert von mindestens einem von dem Mindestempfangssignalpegelparameter, dem Mindestempfangssignalpegeloffsetparameter, dem Leistungskompensationsparameter und dem Messoffsetparameter ist;
Berechnen eines Signalqualitätswerts für die Zellauswahl der Nachbarzelle auf Grundlage eines gemessenen Empfangssignalqualitätswerts, eines zweiten Zielparameterwerts und des zweiten Zieloffsets, wobei der zweite Zielparameterwert der frequenzbezogene Parameterwert von mindestens einem von dem Mindestsignalqualitätsparameter, dem Mindestsignalqualitätsoffsetparameter und dem Messoffsetparameter ist; und
Durchführen des Zellneuauswahlverfahrens auf Grundlage des Empfangssignalpegelwerts für die Zellauswahl, des Signalqualitätswerts für die Zellauswahl und der Neuauswahlbedingung für die Neuauswahl zu der Nachbarzelle.

5. Das Zellneuauswahlverfahren nach Anspruch 2, wobei der Schritt des Durchführens eines Zellneuauswahlverfahrens auf Grundlage des Neuauswahlparameters und einer Neuauswahlbedingung für die Neuauswahl zu der Nachbarzelle umfasst:
Berechnen eines Empfangssignalpegelwerts für die Zellauswahl der Nachbarzelle auf Grundlage eines gemessenen Empfangssignalpegelwerts und der ersten Zwischengröße;
Berechnen eines Signalqualitätswerts für die Zellauswahl der Nachbarzelle auf Grundlage eines gemessenen Empfangssignalqualitätswerts und der zweiten Zwischengröße; und
Durchführen des Zellneuauswahlverfahrens auf Grundlage des Empfangssignalpegelwerts für die Zellauswahl, des Signalqualitätswerts für die Zellauswahl und der Neuauswahlbedingung für die Neuauswahl zu der Nachbarzelle.

6. Ein Endgerät (300), umfassend: einen Prozessor, einen Speicher und ein Computerprogramm, das in dem Speicher gespeichert ist und auf dem Prozessor ausgeführt werden kann, wobei, wenn das Computerprogramm durch den Prozessor ausgeführt wird, die Schritte des Zellneuauswahlverfahrens nach einem der Ansprüche 1 bis 5 implementiert werden.

7. Ein Zellneuauswahlverfahren, das auf eine Netzwerkvorrichtung angewendet wird und Folgendes umfasst:
Senden (51) von Neuauswahlinformationen bezüglich der Zellneuauswahl an ein Endgerät, wobei die Neuauswahlinformationen einen zellbezogenen Neuauswahlparameter einer Nachbarzelle umfassen;
wobei die Zellneuauswahl von einer Quellzelle zu einer Zielzelle erfolgt und die Zielzelle die Nachbarzelle ist;
die Neuauswahlinformationen werden von der Netzwerkvorrichtung in der Quellzelle, in der sich das Endgerät befindet, konfiguriert, oder die Neuauswahlinformationen werden aus einer in der Vergangenheit empfangenen Nachricht erhalten;
wobei der zellbezogene Neuauswahlparameter Folgendes umfasst:
einen Leistungskompensationsparameter;
der Leistungskompensationsparameter wird auf der Grundlage eines Maximalleistungsparameters und eines Leistungsklassenparameters bestimmt; der Maximalleistungsparameter umfasst einen frequenzbezogenen Maximalleistungswert, der der Nachbarzelle entspricht, und einen sechsten Offsetwert, wobei der sechste Offsetwert eine Differenz zwischen einem Zielmaximalleistungswert und dem frequenzbezogenen Maximalleistungswert ist.

8. Das Zellneuauswahlverfahren nach Anspruch 7, wobei der zellbezogene Neuauswahlparameter ferner mindestens einen der folgenden Parameter umfasst:
einen Mindestempfangssignalpegelparameter;
einen Mindestsignalqualitätsparameter;
einen Mindestempfangssignalpegeloffsetparameter;
einen Mindestsignalqualitätsoffsetparameter;
einen Messoffsetparameter;
einen ersten Zieloffset, wobei der erste Zieloffset eine Summe von Differenzen zwischen zellbezogenen Parameterwerten und frequenzbezogenen Parameterwerten von mindestens einem Mindestempfangssignalpegelparameter, einem Mindestempfangssignalpegeloffsetparameter, einem Leistungskompensationsparameter, und einem Messoffsetparameter ist;
einen zweiten Zieloffset, wobei der zweite Zieloffset eine Summe von Differenzen zwischen zellbezogenen Parameterwerten und frequenzbezogenen Parameterwerten von mindestens einem Mindestsignalqualitätsparameter,
einem Mindestsignalqualitätsoffsetparameter und einem Messoffsetparameter ist;
eine erste Zwischengröße, die sich auf einen Empfangssignalpegelwert bezieht, wobei die erste Zwischengröße bezieht sich auf einen zellbezogenen Parameterwert von mindestens einem von einem Mindestempfangssignalpegelparameter, einem Mindestempfangssignalpegeloffsetparameter, einem Leistungskompensationsparameter und einem Messoffsetparameter; und
eine zweite Zwischengröße, die sich auf einen Signalqualitätswert bezieht, wobei die zweite Zwischengröße sich auf einen zellbezogenen Parameterwert von mindestens einem von einem Mindestsignalqualitätsparameter, einem Mindestsignalqualitätsoffsetparameter und einem Messoffsetparameter bezieht; wobei
der Mindestempfangssignalpegeloffsetparameter einen frequenzbezogenen Mindestempfangssignalpegeloffsetwert, der der Nachbarzelle entspricht, und einen zweiten Offsetwert umfasst, wobei der zweite Offsetwert eine Differenz zwischen dem Ziel-Mindestempfangssignalpegeloffsetwert und dem frequenzbezogenen Mindestempfangssignalpegeloffsetwert ist;
der Mindestsignalqualitätsoffsetparameter einen frequenzbezogenen Mindestsignalqualitätsoffsetwert, der der Nachbarzelle entspricht, und einen vierten Offsetwert umfasst, wobei der vierte Offsetwert eine Differenz zwischen dem Ziel-Mindestsignalqualitätsoffsetwert und dem frequenzbezogenen Mindestsignalqualitätsoffsetwert ist;
der Messoffsetparameter einen frequenzbezogenen Messoffsetwert umfasst, der der Nachbarzelle entspricht, und einen fünften Offsetwert, wobei der fünfte Offsetwert ein Offset zwischen dem Ziel-Messoffsetwert und dem frequenzbezogenen Messoffsetwert ist;
wobei der Mindestempfangssignalpegelparameter einen frequenzbezogenen Mindestempfangssignalpegelwert, der der Nachbarzelle entspricht, und einen ersten Offsetwert umfasst, wobei der erste Offsetwert eine Differenz zwischen einem Ziel-Mindestempfangssignalpegelwert und dem frequenzbezogenen Mindestempfangssignalpegelwert ist;
der Mindestsignalqualitätsparameter einen frequenzbezogenen Mindestsignalqualitätswert umfasst, der der Nachbarzelle entspricht, und einen dritten Offsetwert, wobei der dritte Offsetwert eine Differenz zwischen dem Ziel-Mindestsignalqualitätswert und dem frequenzbezogenen Mindestsignalqualitätswert ist.

9. Eine Netzwerkvorrichtung (600), umfassend: einen Prozessor, einen Speicher und ein Computerprogramm, das in dem Speicher gespeichert ist und auf dem Prozessor lauffähig ist, wobei, wenn das Computerprogramm durch den Prozessor ausgeführt wird, die Schritte des Zellneuauswahlverfahrens nach einem der Ansprüche 7 bis 8 implementiert werden.

## Revendications

1. Un procédé de resélection de cellule, appliqué à un terminal et comprenant :
l'obtention (21), auprès d'un dispositif de réseau, d'informations de resélection relatives à la resélection de cellule, dans lequel les informations de resélection comprennent un paramètre de resélection par cellule d'une cellule voisine ;
et
l'exécution (22) d'une procédure de resélection de cellule sur la base du paramètre de resélection par cellule et d'une condition de resélection pour effectuer une resélection vers la cellule voisine ;
dans lequel la resélection de cellule s'effectue d'une cellule source vers une cellule cible, et la cellule cible est la cellule voisine ;
les informations de resélection sont configurées par le dispositif de réseau dans la cellule source dans laquelle le terminal est situé, ou les informations de resélection sont obtenues à partir d'un message reçu antérieurement ;
dans lequel le paramètre de resélection par cellule comprend :
un paramètre de compensation de puissance ;
le paramètre de compensation de puissance est déterminé sur la base d'un paramètre de puissance maximale et d'un paramètre de classe de puissance ;
le paramètre de puissance maximale comprend une valeur de puissance maximale par fréquence correspondant à la cellule voisine et une sixième valeur de décalage, dans lequel la sixième valeur de décalage est une différence entre une valeur de puissance maximale cible et la valeur de puissance maximale par fréquence.

2. Le procédé de resélection de cellule selon la revendication 1, dans lequel le paramètre de resélection par cellule comprend en outre au moins un des paramètres suivants :
un paramètre de niveau minimal de signal reçu ;
un paramètre de qualité minimale du signal ;
un paramètre de décalage de niveau minimal de signal reçu ;
un paramètre de décalage de qualité minimale du signal ;
un paramètre de décalage de mesure ;
un premier décalage cible, dans lequel le premier décalage cible est une somme de différences entre des valeurs de paramètres par cellule et des valeurs de paramètres par fréquence d'au moins un parmi un paramètre de niveau minimal de signal reçu,
un paramètre de décalage de niveau minimal de signal reçu, un paramètre de compensation de puissance, et un paramètre de décalage de mesure ;
un deuxième décalage cible, dans lequel le deuxième décalage cible est une somme de différences entre des valeurs de paramètres par cellule et des valeurs de paramètres par fréquence d'au moins un parmi un paramètre de qualité minimale du signal,
un paramètre de décalage de qualité minimale du signal, et un paramètre de décalage de mesure ; une première grandeur intermédiaire liée à une valeur de niveau de signal reçu, dans lequel la première grandeur intermédiaire est liée à une valeur de paramètre par cellule d'au moins un parmi un paramètre de niveau de signal reçu minimal,
un paramètre de décalage du niveau de signal reçu minimal, un paramètre de compensation de puissance, et un paramètre de décalage de mesure ; et une deuxième grandeur intermédiaire liée à une valeur de qualité du signal, dans lequel la deuxième grandeur intermédiaire est liée à une valeur de paramètre par cellule d'au moins un parmi un paramètre de qualité minimale du signal,
un paramètre de décalage de qualité minimale du signal, et un paramètre de décalage de mesure ; dans lequel le paramètre de décalage de niveau du niveau de signal reçu minimal par fréquence correspondant à la cellule voisine et une deuxième valeur de décalage, dans lequel la deuxième valeur de décalage est une différence entre la valeur cible de décalage du niveau de signal reçu minimal et la valeur de décalage du niveau de signal reçu minimal par fréquence ; le paramètre de décalage de qualité du signal de qualité minimale du signal par fréquence correspondant à la cellule voisine et une quatrième valeur de décalage, dans lequel la quatrième valeur de décalage est une différence entre la valeur cible de décalage de décalage de qualité du signal de qualité minimale du signal par fréquence ;
le paramètre de décalage de mesure comprend une valeur de décalage de mesure par fréquence correspondant à la cellule voisine et une cinquième valeur de décalage,
dans lequel la cinquième valeur de décalage est un décalage entre la valeur cible de décalage de mesure et la valeur de décalage de mesure par fréquence ; dans lequel le paramètre de niveau de signal reçu minimal comprend une valeur du niveau de signal reçu minimal par fréquence correspondant à la cellule voisine et une première valeur de décalage, dans lequel la première valeur de décalage est une différence entre une valeur cible de niveau de signal reçu minimal et la valeur de niveau reçu minimal par fréquence ;
le paramètre de valeur de qualité du signal de qualité minimale du signal par fréquence correspondant à la cellule voisine et une troisième valeur de décalage, dans lequel la troisième valeur de décalage est une différence entre la valeur cible de qualité minimale du signal et de la valeur de qualité minimale du signal par fréquence.

3. Le procédé de resélection de cellule selon la revendication 2, dans lequel l'étape consistant à effectuer une procédure de resélection de cellule sur la base du paramètre de resélection par cellule et d'une condition de resélection pour effectuer une resélection vers la cellule voisine comprend :
calculer une valeur de niveau de signal reçu de sélection de cellule de la cellule voisine sur la base d'une valeur de niveau de signal reçu mesurée et d'au moins un parmi le paramètre de niveau de signal reçu minimal, le paramètre de décalage du niveau de signal reçu minimal, le paramètre de compensation de puissance, et le paramètre de décalage de mesure dans le paramètre de sélection ;
calculer une valeur de qualité du signal de sélection de cellule de la cellule voisine sur la base d'une valeur de qualité du signal reçu mesurée et d'au moins un parmi le paramètre de qualité minimale du signal, le paramètre de décalage de qualité minimale du signal, et le paramètre de décalage de mesure dans le paramètre de sélection ; et
effectuer la procédure de resélection de cellule sur la base de la valeur de niveau de signal reçu de sélection de cellule, de la valeur de qualité du signal de sélection de cellule, et de la condition de resélection pour effectuer une resélection vers la cellule voisine.

4. Le procédé de resélection de cellule selon la revendication 2, dans lequel l'étape consistant à effectuer une procédure de resélection de cellule sur la base du paramètre de resélection et d'une condition de resélection pour effectuer une resélection vers la cellule voisine comprend :
calculer une valeur de niveau de signal reçu de sélection de cellule de la cellule voisine sur la base d'une valeur de niveau de signal reçu mesurée, d'une première valeur de paramètre cible, et du premier décalage cible, dans lequel la première valeur de paramètre cible est la valeur de paramètre par fréquence de l'au moins un parmi le paramètre de niveau de signal reçu minimal, le paramètre de décalage de niveau de signal reçu minimal, le paramètre de compensation de puissance, et le paramètre de décalage de mesure ;
calculer une valeur de qualité du signal de sélection de cellule de la cellule voisine sur la base d'une valeur de qualité du signal reçu mesurée, d'une seconde valeur de paramètre cible, et du second décalage cible, dans lequel la seconde valeur de paramètre cible est la valeur de paramètre par fréquence de l'au moins un parmi le paramètre de qualité minimale du signal, le paramètre de décalage de qualité minimale du signal, et le paramètre de décalage de mesure ; et
effectuer la procédure de resélection de cellule sur la base de la valeur de niveau de signal reçu de sélection de cellule, de la valeur de qualité du signal de sélection de cellule, et de la condition de resélection pour effectuer une resélection vers la cellule voisine.

5. Le procédé de resélection de cellule selon la revendication 2, dans lequel l'étape consistant à effectuer une procédure de resélection de cellule sur la base du paramètre de resélection et d'une condition de resélection pour effectuer une resélection vers la cellule voisine comprend :
calculer une valeur de niveau de signal reçu de sélection de cellule de la cellule voisine sur la base d'une valeur de niveau de signal reçu mesurée et de la première quantité intermédiaire ;
calculer une valeur de qualité du signal de sélection de cellule de la cellule voisine sur la base d'une valeur de qualité du signal reçu mesurée et de la seconde quantité intermédiaire ; et
effectuer la procédure de resélection de cellule sur la base de la valeur de niveau de signal reçu de sélection de cellule, de la valeur de qualité du signal de sélection de cellule, et de la condition de resélection pour effectuer une resélection vers la cellule voisine.

6. Un terminal (300), comprenant : un processeur, une mémoire et un programme informatique stocké dans la mémoire et capable de s'exécuter sur le processeur, dans lequel, lorsque le programme informatique est exécuté par le processeur, les étapes du procédé de resélection de cellule selon l'une quelconque des revendications 1 à 5 sont mises en œuvre.

7. Un procédé de resélection de cellule, appliqué à un dispositif de réseau et comprenant : l'envoi (51), à un terminal, d'informations de resélection relatives à la resélection de cellule, dans lequel les informations de resélection comprennent un paramètre de resélection par cellule d'une cellule voisine ;
dans lequel la resélection de cellule s'effectue d'une cellule source vers une cellule cible, et la cellule cible est la cellule voisine ;
les informations de resélection sont configurées par le dispositif de réseau dans la cellule source dans laquelle le terminal est situé, ou les informations de resélection sont obtenues à partir d'un message reçu antérieurement ;
dans lequel le paramètre de resélection par cellule comprend :
un paramètre de compensation de puissance ;
le paramètre de compensation de puissance est déterminé sur la base d'un paramètre de classe de puissance ; le paramètre de puissance maximale comprend une valeur de puissance maximale par fréquence correspondant à la cellule voisine et une sixième valeur de décalage, dans lequel la sixième valeur de décalage est une différence entre une valeur de puissance maximale cible et la valeur de puissance maximale par fréquence.

8. Le procédé de resélection de cellule selon la revendication 7, dans lequel le paramètre de resélection par cellule comprend en outre au moins un des paramètres suivants :
un paramètre de niveau de signal reçu minimal ;
un paramètre de qualité minimale du signal ;
un paramètre de décalage de niveau de signal reçu minimal ;
un paramètre de décalage de qualité minimale du signal ;
un paramètre de décalage de mesure ;
un premier décalage cible, dans lequel le premier décalage cible est une somme de différences entre des valeurs de paramètres par cellule et des valeurs de paramètres par fréquence d'au moins un parmi un paramètre de niveau de signal reçu minimal, un paramètre de décalage de niveau de signal reçu minimal, un paramètre de compensation de puissance, et un paramètre de décalage de mesure ;
un deuxième décalage cible, dans lequel le deuxième décalage cible est une somme de différences entre des valeurs de paramètres par cellule et des valeurs de paramètres par fréquence d'au moins un parmi un paramètre de qualité minimale du signal, un paramètre de décalage de qualité minimale du signal et un paramètre de décalage de mesure ;
une première quantité intermédiaire liée à une valeur de niveau de signal reçu, dans lequel la première quantité intermédiaire est liée à une valeur de paramètre par cellule d'au moins un parmi un paramètre de niveau de signal reçu minimal,
un paramètre de décalage de niveau de signal reçu minimal, un paramètre de compensation de puissance, et un paramètre de décalage de mesure ; et une seconde quantité intermédiaire liée à une valeur de qualité du signal, dans lequel la seconde quantité intermédiaire est liée à une valeur de paramètre par cellule d'au moins un parmi un paramètre de qualité minimale du signal,
un paramètre de décalage de qualité minimale du signal, et un paramètre de décalage de mesure ; dans lequel
le paramètre de décalage de niveau de signal reçu minimal comprend une valeur de décalage de niveau de signal reçu minimal par fréquence correspondant à la cellule voisine et une deuxième valeur de décalage, dans lequel la deuxième valeur de décalage est une différence entre la valeur cible de décalage de niveau de signal reçu minimal et la valeur de décalage de niveau de signal reçu minimal par fréquence ;
le paramètre de décalage de décalage de qualité du signal de qualité minimale du signal par fréquence correspondant à la cellule voisine et une quatrième valeur de décalage, dans lequel la quatrième valeur de décalage est une différence entre la valeur cible de décalage de qualité minimale du signal et la valeur de décalage de qualité minimale du signal par fréquence ;
le paramètre de décalage de mesure comprend une valeur de décalage de mesure par fréquence correspondant à la cellule voisine et une cinquième valeur de décalage, dans lequel la cinquième valeur de décalage est un décalage entre la valeur cible de décalage de mesure et la valeur de décalage de mesure par fréquence ;
dans lequel le paramètre de niveau de signal reçu minimal comprend une valeur de niveau de signal reçu minimal par fréquence correspondant à la cellule voisine et une première valeur de décalage, dans lequel la première valeur de décalage est une différence entre une valeur cible de niveau de signal reçu minimal et la valeur de niveau de signal reçu minimal par- fréquence ;
le paramètre de valeur de qualité du signal de qualité minimale du signal par fréquence correspondant à la cellule voisine et une troisième valeur de décalage, dans lequel la troisième valeur de décalage est une différence entre la valeur cible de qualité minimale du signal et la valeur de qualité minimale du signal par fréquence.

9. Un dispositif de réseau (600), comprenant : un processeur, une mémoire, et un programme informatique stocké dans la mémoire et capable de s'exécuter sur le processeur, dans lequel, lorsque le programme informatique est exécuté par le processeur, les étapes du procédé de resélection de cellule selon l'une quelconque des revendications 7 à 8 sont mises en œuvre.
